(19) Europäisches Patentamt
European Patent Office
Office européen des brevets

(11) **EP 4 339 166 A1**

(12) **EUROPEAN PATENT APPLICATION**

(43) Date of publication:
**20.03.2024   Bulletin 2024/12**

(21) Application number: **23197769.5**

(22) Date of filing: **15.09.2023**

(51) International Patent Classification (IPC):
**C02F 1/467** $^{(2023.01)}$        **C25B 1/26** $^{(2006.01)}$
**C25B 9/00** $^{(2021.01)}$        C02F 103/42 $^{(2006.01)}$

(52) Cooperative Patent Classification (CPC):
**C02F 1/4674; C25B 1/26; C25B 9/00;**
C02F 2103/42; C02F 2209/06; C02F 2301/043

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.09.2022   NL 2033059**

(71) Applicant: **Magen Eco Energy A.C.S. Ltd.
8546500 Kibbutz Magen (IL)**

(72) Inventors:
• **BUZAGLO, Ronen Bar
8546500 D N Hanegev (IL)**
• **MORSE, Nitzan
8546500 D N Hanegev (IL)**
• **GOLDIN, Rani
8546500 D N Hanegev (IL)**

(74) Representative: **Arnold & Siedsma
Bezuidenhoutseweg 57
2594 AC The Hague (NL)**

(54) **CHLORINATOR**

(57) A chlorinator includes an electrode assembly and a housing. The housing includes a first water flow opening, a second water flow opening, an electrolysis chamber for accommodating the electrode assembly, a sampling chamber for selectively enabling sampling of water entering the housing in operation of the chlorinator, and a flow stream separator. The flow stream separator includes a partition wall axially extending between a first partition edge and a second partition edge. The partition wall separates the housing internal volume into a main channel and an auxiliary channel. The main channel extends axially between the first partition edge and the second partition edge, and wholly accommodates therein the electrolysis chamber on a first side of the partition wall. The auxiliary channel extends axially between the first partition edge and the second partition edge and wholly accommodates therein the sampling chamber on a second side of the partition wall. The flow separator separates water flowing into the housing into a main water stream flowing through the main channel, and thus through the electrode assembly, and an auxiliary water stream flowing through the auxiliary channel, and thus through the sampling chamber.

FIG. 1

EP 4 339 166 A1

**Description**

**TECHNOLOGICAL FIELD**

The presently disclosed subject matter relates to, chlorinators, for example to pool chlorinators, in particular to chlorinators configured for producing chlorine-based sanitizing agents by electrolysis.

**BACKGROUND**

Swimming pools are commonly treated with a sanitizing agent, such as chlorine for example, in order to maintain a clean swimming environment. The sanitizing agent can be dispensed at a suitable rate to the water by a dedicated dispenser as a liquid or a solid, such as in tablet form.

The sanitizing agent can also be produced within the water itself. For example, salt may be added to the swimming water at a tolerable level. The salted water is directed into a chlorinator which produces the sanitizing agent through electrolysis. The water with the newly-produced sanitizing agent is then directed back into the pool.

Similarly, other bodies of water are also sometimes with a sanitizing agent.

**GENERAL DESCRIPTION**

According to a first aspect of the presently disclosed subject matter, there is provided a housing for use in a chlorinator, the chlorinator being operable with an electrode assembly accommodated in the housing to produce one or more sanitizing agents from solute dissolved in water in operation of the chlorinator, said housing comprising a first water flow opening, a second water flow opening, an electrolysis chamber, a sampling chamber, at least one acid entry port, and a sampling chamber shielding arrangement:

the first water flow opening being axially spaced from the second water flow opening and defining therebetween a housing internal volume, the first water flow opening and the second water flow opening configured for being coupled to a source of water in operation of the chlorinator;

said electrolysis chamber being configured for accommodating therein at least a portion of the electrode assembly;

the at least one acid entry port being configured for selectively enabling introduction of an acid therethrough into the electrolysis chamber,;

the sampling chamber shielding arrangement being transversely interposed between the at least one acid entry port and the sampling chamber;

the sampling chamber shielding arrangement being configured for preventing transverse fluid communication therethrough, in particular for preventing transverse fluid communication through the shielding arrangement between the at least one acid entry port and the sampling chamber.

For example, the at least one acid entry port is configured for selectively enabling introduction of an acid therethrough transversely and/or directly into the electrolysis chamber. Additionally or alternatively, for example, the at least one acid entry port is in direct fluid communication transversely with the electrolysis chamber.

The sampling chamber shielding arrangement is thus configured for minimizing or preventing spill of the acid into the sampling chamber following introduction of the acid into the housing, in particular following introduction of the acid into the electrolysis chamber, via the at least one acid entry port.

For example, the sampling chamber comprises at least one sampling port, configured for enabling at least one sensor to be introduced into the sampling chamber from an outside of the housing.

For example, the sampling chamber shielding arrangement comprises a first axial edge, a second axial edge and a shielding wall, the shielding wall axially extending between the first axial edge and the second axial edge, wherein the at least one acid entry port is axially intermediate with respect to each one of the first axial edge and the second axial edge.

For example, the shielding wall comprises a first side and an opposite facing second side, wherein the shielding wall separates the housing internal volume into a main channel and an auxiliary channel, the main channel extending axially between said first axial edge and said second axial edge, and wholly accommodating therein the electrolysis chamber on said first side of the shielding wall, the auxiliary channel extending axially between the first axial edge and the second axial edge and wholly accommodating therein the sampling chamber on said second side of the shielding wall. For example, the at least one acid port is wholly located in said main channel. For example, the shielding wall transversely separates the housing internal volume into the main channel and the auxiliary channel.

Additionally or alternatively, for example, the shielding wall is impermeable to water.

Additionally or alternatively, for example, the at least one acid entry port is transversely spaced from the shielding wall by a first vertical spacing. For example, the shielding wall has a shielding wall axial length, and a ratio of the first vertical spacing to the shielding wall axial length is between 0.05 to 0.15.

Additionally or alternatively, for example, the first axial edge extends away from the at least one acid entry port towards the first water flow opening by a first axial distance. For example, said first axial distance is about 30% of an axial dimension of the housing.

Additionally or alternatively, for example, the second axial edge extends away from the at least one acid entry port and towards the second water flow opening by a second axial distance. For example, said second axial distance is about 30% of an axial dimension of the housing.

Additionally or alternatively, for example, said first axial edge has a first edge axially extending cross-section parallel to a centerline of the housing.

Additionally or alternatively, for example, said second axial edge has a second edge axially extending cross-section parallel to a centerline of the housing.

Additionally or alternatively, for example, said shielding wall has a shielding wall axial cross-section parallel to a centerline of the housing.

Additionally or alternatively, for example, said first edge defines a first auxiliary channel opening having a first auxiliary channel transverse cross-sectional area, and a first main channel opening having a first main channel transverse cross-sectional area. For example, a ratio of said first main channel transverse cross-sectional area to said first auxiliary channel transverse cross-sectional area is in the range between about 7 to about 15. For example, a ratio of said first main channel transverse cross-sectional area to said first auxiliary channel transverse cross-sectional area is any one of: 15, 14, 13, 12, 11, 10, 9, 8, 7.

Additionally or alternatively, for example, said second edge defines a second auxiliary channel opening having a second auxiliary channel transverse cross-sectional area, and a second main channel opening having a second main channel transverse cross-sectional area. For example, a ratio of said second main channel transverse cross-sectional area to said second auxiliary channel transverse cross-sectional area is in the range between about 7 to about 15. For example, a ratio of said second main channel transverse cross-sectional area to said second auxiliary channel transverse cross-sectional area is any one of: 15, 14, 13, 12, 11, 10, 9, 8, 7.

Additionally or alternatively, for example, the shielding arrangement is further configured as a flow separator, the flow separator being configured in operation of the chlorinator for separating at the first axial edge water flowing into the housing via the first water flow opening into a main water stream flowing through the main channel and an auxiliary water stream flowing through the auxiliary channel. For example, the flow separator is further configured in operation of the chlorinator for separating at the second axial edge water flowing into the housing via the second water flow opening into the main water stream flowing through the main channel and the auxiliary water stream flowing through the auxiliary channel.

Additionally or alternatively, for example, the shielding arrangement is configured for preventing any transverse cross-flow between the main channel and the auxiliary channel, at any location between the first axial edge and the second axial edge.

Additionally or alternatively, for example, the main channel wholly accommodates therein the electrolysis chamber on said first side, wherein said first side is a first transverse side of the shielding wall.

Additionally or alternatively, for example, the auxiliary channel wholly accommodates therein the sampling chamber on said second side, wherein said second side is a second transverse side of the shielding wall, the second transverse side being opposite facing with respect to the first transverse side.

Additionally or alternatively, for example, the first axial edge is spaced from the first water flow opening by a first axial spacing.

Additionally or alternatively, for example, the second axial edge is spaced from the second water flow opening by a second axial spacing.

Additionally or alternatively, for example, the first electrolysis chamber axial end is axially spaced with respect to the first water flow opening by a third axial spacing, and wherein the second electrolysis chamber axial end being is axially spaced with respect to the second water flow opening a fourth axial spacing. For example, a ratio of said first axial spacing to said third axial spacing is in any one of the following ranges: 0.2 to 0.8; 0.5 to 0.7; 0.2 to 0.5. For example, a ratio of said second axial spacing to said fourth axial spacing is in any one of the following ranges: 0.2 to 0.8; 0.5 to 0.7; 0.2 to 0.5.

Additionally or alternatively, for example, said sampling chamber comprises a flow diverter configured for directing the auxiliary water stream from the first axial edge to a bottom section of the sampling chamber, and for directing the auxiliary water stream from said bottom section to the second axial edge, the flow diverter including a barrier wall in the sampling chamber and projecting transversely in the auxiliary channel with respect to a longitudinal axis of the housing. For example, said flow diverter is configured for causing the auxiliary water stream to change direction by an angle greater than 60° degrees when flowing through the auxiliary channel from the first axial edge to the bottom section. Additionally or alternatively, for example, said barrier wall transversely projects away from the second side of the shielding wall. Additionally or alternatively, for example, the sampling chamber (optionally including the flow diverter) is configured for providing a water trap in operation of the respective chlorinator.

Additionally or alternatively, for example, said sampling chamber comprises a at least one, and for example a plurality of, said sampling ports, each said port configured for enabling a sensor to be introduced into the sampling chamber from an outside of the housing.

Additionally or alternatively, for example, the sampling chamber is laterally displaced with respect to the electrolysis chamber.

Additionally or alternatively, for example, the sampling chamber comprises a laterally disposed access hatch.

Additionally or alternatively, for example, the housing comprises a single said acid entry port.

Additionally or alternatively, for example, the housing is configured for being coupled to an inlet conduit and to an outlet conduit of a water recirculation circuit, alternately in each one of a first installation configuration and a second installation configuration, wherein:

- in said first installation configuration the first water flow opening operates as a water inlet port and the second water flow opening operates as a water outlet port for the water, such that the first water flow opening is connected to an upstream portion of the water recirculation circuit and receives water flow therefrom, while the second water flow opening is connected to a downstream portion of the water recirculation circuit and delivers water flow thereto;

- in second first installation configuration the second water flow opening operates as a water inlet port and the first water flow opening operates as a water outlet port for the water, such that the second water flow opening is connected to an upstream portion of the water recirculation circuit and receives water flow therefrom, while the first water flow opening is connected to a downstream portion of the water recirculation circuit and delivers water flow thereto.

According to a second aspect of the presently disclosed subject matter there is provided a chlorinator, comprising the housing as defined herein regarding the first aspect of the presently disclosed subject matter, and an electrode assembly accommodated in the electrolysis chamber.

For example, the chlorinator comprises a control unit for controlling operation of the electrode assembly.

Additionally or alternatively, for example, the chlorinator comprises a fluid flow sensor arrangement configured for detecting the presence of water flowing inside the housing.

According to a third aspect of the presently disclosed subject matter there is provided a water recirculation circuit including:

at least one chlorinator as defined as defined herein regarding the second aspect of the presently disclosed subject matter;
a body of water;
a pumping system;
a controller;
an inlet conduit configured for channeling water from the body of water to the chlorinator;
an outlet conduit configured for channeling water from the chlorinator to the body of water.

For example, the chlorinator is installed in a first installation configuration, wherein the first water flow opening is connected to said inlet conduit such as to receive water flow therefrom, and wherein the second water flow opening is connected to said outlet conduit such as to deliver water flow thereto, during operation of the chlorinator. Alternatively, for example, the chlorinator is installed in a second installation configuration, wherein the second water flow opening is connected to said inlet conduit such as to receive water flow therefrom, and wherein the first water flow opening is connected to said outlet conduit such as to deliver water flow thereto, during operation of the chlorinator.

According to a fourth aspect of the presently disclosed subject matter there is provided a housing for use in a chlorinator, the chlorinator being operable with an electrode assembly accommodated in the housing to produce one or more sanitizing agents from solute dissolved in water in operation of the chlorinator, said housing comprising a first water flow opening, a second water flow opening, an electrolysis chamber, a sampling chamber, and a flow stream separator:

the first water flow opening being axially spaced from the second water flow opening and defining therebetween a housing internal volume, the first water flow opening and the second water flow opening configured for being coupled to a source of water in operation of the chlorinator;
said electrolysis chamber being configured for accommodating therein at least a portion of the electrode assembly;
the electrolysis chamber axially extending between a first electrolysis chamber axial end and a second electrolysis chamber axial end, the first electrolysis chamber axial end being in fluid communication with the first water flow opening, the second electrolysis chamber axial end being in fluid communication with the second water flow opening;
the sampling chamber configured for selectively enabling sampling of water entering the housing in operation of the chlorinator;
the flow stream separator comprising a first partition edge, a second partition edge and a partition wall, the first partition edge being axially spaced from the second partition, the partition wall axially extending between the first partition edge and the second partition edge;
the partition wall separating the housing internal volume into a main channel and an auxiliary channel, the main channel extending axially between said first partition edge and said second partition edge, and axially wholly accommodating therein (in particular along a part of a length thereof) the electrolysis chamber on a first side of the partition wall, the auxiliary channel defined between and extending axially between a first auxiliary channel opening axially defined at the first partition edge and a second auxiliary channel opening axially defined at the second partition edge, the sampling chamber being wholly accommodated axially in the auxiliary channel between the first auxiliary channel opening and the second auxiliary channel opening, on a second side of the partition wall;
the flow separator being configured in operation of the chlorinator for separating at the first partition edge water flowing into the housing via the first water flow opening into a main water stream flowing through the main channel and an auxiliary water stream flowing through the auxiliary channel between the first partition edge and the second partition edge (or between the first auxiliary channel opening and the second auxiliary channel opening).

For example, the sampling chamber comprises at least one sampling port, configured for enabling at least one sensor to be introduced into the sampling chamber from an outside of the housing.

For example, the partition wall is configured for preventing any transverse cross-flow between the main channel and the auxiliary channel, at any location between the first partition edge and the second partition edge.

For example, the first partition edge is axially spaced from the first electrolysis chamber axial end of the electrolysis chamber. Additionally or alternatively, for example, the second partition edge is axially spaced from the second electrolysis chamber axial end of the electrolysis chamber.

For example, the flow separator is further configured in operation of the chlorinator for separating at the second partition edge water flowing into the housing via the second water flow opening into a respective main water stream flowing through the main channel and a respective auxiliary stream flowing through the auxiliary channel.

Additionally or alternatively, for example, the partition wall transversely separates the housing internal volume into the main channel and the auxiliary channel

Additionally or alternatively, for example, the main channel wholly accommodates therein the electrolysis chamber on a first transverse side of the partition wall.

Additionally or alternatively, for example, the auxiliary channel wholly accommodates therein the sampling chamber on a second transverse side of the partition wall, the second transverse side being opposite facing with respect to the first transverse side.

Additionally or alternatively, for example, the partition wall is impermeable to water.

Additionally or alternatively, for example, the first partition edge is spaced from the first water flow opening by a first axial spacing.

Additionally or alternatively, for example, the second partition edge is spaced from the second water flow opening by a second axial spacing.

Additionally or alternatively, for example, said first partition edge has an axially extending cross-section parallel to a centerline of the housing.

Additionally or alternatively, for example, said second partition edge has an axially extending cross-section parallel to a centerline of the housing.

Additionally or alternatively, for example, said partition wall has a shielding wall axial cross-section parallel to a centerline of the housing.

Additionally or alternatively, for example, said first partition edge defines a first auxiliary channel opening having a first auxiliary channel transverse cross-sectional area, and a first main channel opening having a first main channel transverse cross-sectional area. For example, a ratio of said first main channel transverse cross-sectional area to said first auxiliary channel transverse cross-sectional area is in the range between about 7 to about 15. For example, a ratio of said first main channel transverse cross-sectional area to said first auxiliary channel transverse cross-sectional area is any one of: 15, 14, 13, 12, 11, 10, 9, 8, 7.

Additionally or alternatively, for example, said second partition edge defines a second auxiliary channel opening having a second auxiliary channel transverse cross-sectional area, and a second main channel opening having a second main channel transverse cross-sectional area. For example, a ratio of said second main channel transverse cross-sectional area to said second auxiliary channel transverse cross-sectional area is in the range between about 7 to about 15. For example, a ratio of said second main channel transverse cross-sectional area to said second auxiliary channel transverse cross-sectional area is any one of: 15, 14, 13, 12, 11, 10, 9, 8, 7.

Additionally or alternatively, for example, the first electrolysis chamber axial end is axially spaced with respect to the first water flow opening by a third axial spacing, and wherein the second electrolysis chamber axial end is axially spaced with respect to the second water flow opening a fourth axial spacing. For example, a ratio of said first axial spacing to said third axial spacing is in any one of the following ranges: 0.2 to 0.8; 0.5 to 0.7; 0.2 to 0.5. For example, a ratio of said second axial spacing to said fourth axial spacing is in any one of the following ranges: 0.2 to 0.8; 0.5 to 0.7; 0.2 to 0.5.

Additionally or alternatively, for example, said sampling chamber comprises a flow diverter configured for directing the auxiliary water stream from the first axial edge to a bottom section of the sampling chamber, and for directing the auxiliary water stream from said bottom section to the second axial edge, the flow diverter including a barrier wall in the sampling chamber and projecting transversely in the auxiliary channel with respect to a longitudinal axis of the housing. For example, said flow diverter is configured for causing the auxiliary water stream to change direction by an angle greater than 60°degrees when flowing through the auxiliary channel from the first axial edge to the bottom section. Additionally or alternatively, for example, said barrier wall transversely projecting away from the second side of the partition wall. Additionally or alternatively, for example, the sampling chamber including the flow diverter are configured for providing a water trap in operation of the respective chlorinator.

Additionally or alternatively, for example, said sampling chamber comprises at least one, and for example a plurality of, said sampling ports, each said port configured for enabling a sensor to be introduced into the sampling chamber from an outside of the housing.

Additionally or alternatively, for example, the sampling chamber is laterally displaced with respect to the electrolysis chamber.

Additionally or alternatively, for example, the sampling chamber comprises a laterally disposed access hatch.

Additionally or alternatively, for example, the housing is configured for being coupled to an inlet conduit and to an outlet conduit of a water recirculation circuit, alternately in each one of a first installation configuration and a second installation configuration, wherein:

-    in said first installation configuration the first water flow opening operates as a water inlet port and the second water flow opening operates as a water outlet port for the water, such that the first water flow opening is connected to an upstream portion of the water recirculation circuit and receives water flow therefrom, while the second water flow opening is connected to a downstream portion of the water recirculation circuit and delivers water flow thereto;
-    in second first installation configuration the second water flow opening operates as a water inlet port and the first water flow opening operates as a water outlet port for the water, such that the second water flow opening is connected to an upstream portion of the water recirculation circuit and receives water flow therefrom, while the first water flow opening is connected to a downstream portion of the water recirculation circuit and delivers water flow thereto.

Additionally or alternatively, for example, the housing comprises at least one acid port and a sampling chamber shielding arrangement as defined herein regarding the first aspect of the presently disclosed subject matter. For example, the flow separator is configured as a shielding arrangement, for example as defined herein regarding the first aspect of the presently disclosed subject matter.

For example, the housing comprises further comprising at least one acid entry port, wherein:

the at least one acid entry port is configured for selectively enabling introduction of an acid transversely therethrough into the electrolysis chamber;
the flow stream separator being transversely interposed between the at least one acid entry port and the sampling chamber;
the flow stream separator being configured for preventing transverse fluid communication therethrough.

For example, the at least one acid port is wholly located in said main channel.

Additionally or alternatively, for example, the at least one acid entry port is axially intermediate with respect to the first partition edge and the second partition edge.

Additionally or alternatively, for example, the at least one acid entry port is transversely spaced from the partition wall by a first vertical spacing. For example, the partition wall has a partition wall axial length, and wherein a ratio of the first vertical spacing to the partition wall axial length is between 0.05 to 0.15.

Additionally or alternatively, for example, the first partition edge extends away from the at least one acid entry port towards the first water flow opening by a first axial distance. For example, said first axial distance is about 30% of an axial dimension of the housing.

Additionally or alternatively, for example, the second partition edge extends away from the at least one acid entry port and towards the second water flow opening by a second axial distance. For example, said second axial distance is about 30% of an axial dimension of the housing.

Additionally or alternatively, for example, the housing comprises a single said acid entry port.

According to the fourth aspect of the presently disclosed subject matter there is also provided a chlorinator including an electrode assembly and a housing. The housing includes a first water flow opening, a second water flow opening, an electrolysis chamber for accommodating the electrode assembly, a sampling chamber for selectively enabling sampling of water entering the housing in operation of the chlorinator, and a flow stream separator. The flow stream separator includes a partition wall axially extending between a first partition edge and a second partition edge. The partition wall separates the housing internal volume into a main channel and an auxiliary channel. The main channel extends axially between the first partition edge and the second partition edge, and wholly accommodates therein the electrolysis chamber on a first side of the partition wall. The auxiliary channel extends axially between the first partition edge and the second partition edge and wholly accommodates therein the sampling chamber on a second side of the partition wall. The flow separator separates water flowing into the housing into a main water stream flowing through the main channel, and thus through the electrode assembly, and an auxiliary water stream flowing through the auxiliary channel, and thus through the sampling chamber.

According to a fifth aspect of the presently disclosed subject matter, there is provided a chlorinator, comprising the housing as defined herein regarding the fourth aspect of the presently disclosed subject matter, and an electrode assembly accommodated in the electrolysis chamber.

For example, the chlorinator comprises a control unit for controlling operation of the electrode assembly.

Additionally or alternatively, for example, the chlorinator comprises a fluid flow sensor arrangement configured for detecting the presence of water flowing inside the housing.

According to a sixth aspect of the presently disclosed subject matter there is provided a water recirculation circuit including:

at least one chlorinator as defined herein according to the fifth aspect of the presently disclosed subject matter;
a body of water;
a pumping system;
a controller;
an inlet conduit configured for channeling water from the body of water to the chlorinator;
an outlet conduit configured for channeling water from the chlorinator to the body of water.

For example, the chlorinator is installed in a first installation configuration, wherein the first water flow opening is connected to said inlet conduit such as to receive water flow therefrom, and wherein the second water flow opening is connected to said outlet conduit such as to deliver water flow thereto, during operation of the chlorinator.

For example, the chlorinator is installed in a second installation configuration, wherein the second water flow opening is connected to said inlet conduit such as to receive water flow therefrom, and wherein the first water flow opening is connected to said outlet conduit such as to deliver water flow thereto, during operation of the chlorinator.

According to a seventh aspect of the presently disclosed subject matter there is provided a housing for use in a chlorinator, the chlorinator being operable with an electrode assembly accommodated in the housing to produce one or more sanitizing agents from solute dissolved in water in operation of the chlorinator, said housing comprising a first water flow opening, a second water flow opening, an electrolysis chamber, a sampling chamber:

the first water flow opening being axially spaced from the second water flow opening and defining therebetween a housing internal volume, the first water flow opening and the second water flow opening configured for being coupled to a source of water in operation of the chlorinator;
said electrolysis chamber being configured for accommodating therein at least a portion of the electrode assembly;
the housing being configured in operation of the chlorinator for separating water flowing into the housing via the first water flow opening into a main water stream flowing through a main channel and an auxiliary water stream flowing through an auxiliary channel;
the sampling chamber comprising a flow diverter, the flow diverter including a barrier wall in the sampling chamber and projecting transversely in the auxiliary channel with respect to a longitudinal axis of the housing, the flow diverter configured for directing the auxiliary water stream from a first end of the auxiliary channel to a bottom section of the sampling chamber, and for directing the auxiliary water stream from said bottom section to a second end of the auxiliary channel.

For example, the sampling chamber comprises at least one sampling port, configured for enabling at least one sensor to be introduced into the sampling chamber from an outside of the housing.

For example, said flow diverter is configured for causing the auxiliary water stream to change direction by an angle greater than 60° degrees when flowing through the auxiliary channel from the first end to the bottom section.

Additionally or alternatively, for example, said housing further comprises a sampling chamber shielding arrangement including an axially extending shielding wall, wherein said barrier wall transversely projects away from one side of the shielding wall.

Additionally or alternatively, for example, the shielding arrangement is configured for preventing any transverse cross-flow between the main channel and the auxiliary channel, at any location between the first axial edge and the second axial edge.

Additionally or alternatively, for example, the sampling chamber including the flow diverter are configured for providing a water trap in operation of the respective chlorinator.

Additionally or alternatively, for example, the housing comprises a flow separator as defined herein regarding the fourth aspect of the presently disclosed subject matter.

Additionally or alternatively, for example, the housing comprises at least one acid port and a sampling chamber shielding arrangement as defined herein regarding the first aspect of the presently disclosed subject matter. For example the sampling chamber shielding arrangement comprises a shielding wall having a first side and a second side, wherein the electrolysis chamber is on the first side of the sampling chamber shielding arrangement. For example, said barrier wall is transversely projecting away from a second side of the shielding wall.

According to an eighth aspect of the presently disclosed subject matter, there is provided a chlorinator, comprising the housing as defined herein regarding the seventh aspect of the presently disclosed subject matter, and an electrode assembly accommodated in the electrolysis chamber.

For example, the chlorinator comprises a control unit for controlling operation of the electrode assembly.

Additionally or alternatively, for example, the chlorinator comprises a fluid flow sensor arrangement configured for detecting the presence of water flowing inside the housing.

According to a ninth aspect of the presently disclosed subject matter there is provided a water recirculation circuit including:

> at least one chlorinator as defined herein according to the eighth aspect of the presently disclosed subject matter;
> a body of water;
> a pumping system;
> a controller;
> an inlet conduit configured for channeling water from the body of water to the chlorinator;
> an outlet conduit configured for channeling water from the chlorinator to the body of water.

For example, the chlorinator is installed in a first installation configuration, wherein the first water flow opening is connected to said inlet conduit such as to receive water flow therefrom, and wherein the second water flow opening is connected to said outlet conduit such as to deliver water flow thereto, during operation of the chlorinator.

For example, the chlorinator is installed in a second installation configuration, wherein the second water flow opening is connected to said inlet conduit such as to receive water flow therefrom, and wherein the first water flow opening is connected to said outlet conduit such as to deliver water flow thereto, during operation of the chlorinator.

According to a tenth aspect of the presently disclosed subject matter there is provided a housing for use in a chlorinator, the chlorinator being operable with an electrode assembly accommodated in the housing to produce one or more sanitizing agents from solute dissolved in water in operation of the chlorinator, said housing comprising a first water flow opening, a second water flow opening, an electrolysis chamber, a sampling chamber, at least one acid entry port, and a sampling chamber shielding arrangement:

> the first water flow opening being axially spaced from the second water flow opening and defining therebetween a housing internal volume, the first water flow opening and the second water flow opening configured for being coupled to a source of water in operation of the chlorinator;
> said electrolysis chamber being configured for accommodating therein at least a portion of the electrode assembly;
> the housing being configured in operation of the chlorinator for separating water flowing into the housing via the first water flow opening into a main water stream flowing through a main channel and an auxiliary water stream flowing through an auxiliary channel;
> the sampling chamber configured for providing a water trap in operation of the respective chlorinator.

For example, the sampling chamber comprises a flow diverter configured for directing the auxiliary water stream from a first end of the auxiliary channel to a bottom section of the sampling chamber, and for directing the auxiliary water stream from said bottom section to a second end of the auxiliary channel.

For example, said flow diverter is configured for causing the auxiliary water stream to change direction by an angle greater than 60° degrees when flowing through the auxiliary channel from the first end to the bottom section.

Additionally or alternatively, for example, said flow diverter is in the form of a barrier wall in the sampling chamber, said barrier wall transversely projecting away from the second side of the shielding wall.

Additionally or alternatively, for example, the housing comprises a flow separator as defined herein regarding the fourth aspect of the presently disclosed subject matter.

Additionally or alternatively, for example, the housing comprises at least one acid port and a sampling chamber shielding arrangement as defined herein regarding the first aspect of the presently disclosed subject matter.

According to an eleventh aspect of the presently disclosed subject matter, there is provided a chlorinator, comprising the housing as defined herein regarding the tenth aspect of the presently disclosed subject matter, and an electrode assembly accommodated in the electrolysis chamber.

For example, the chlorinator comprises a control unit for controlling operation of the electrode assembly.

Additionally or alternatively, for example, the chlorinator comprises a fluid flow sensor arrangement configured for detecting the presence of water flowing inside the housing.

According to a twelfth aspect of the presently disclosed subject matter there is provided a water recirculation circuit including:

> at least one chlorinator as defined herein according to the eleventh aspect of the presently disclosed subject matter;
> a body of water;
> a pumping system;
> a controller;
> an inlet conduit configured for channeling water from the body of water to the chlorinator;
> an outlet conduit configured for channeling water from the chlorinator to the body of water.

For example, the chlorinator is installed in a first installation configuration, wherein the first water flow opening is connected to said inlet conduit such as to receive water flow therefrom, and wherein the second water flow opening is connected to said outlet conduit such as to deliver water flow thereto, during operation of the chlorinator.

For example, the chlorinator is installed in a second installation configuration, wherein the second water flow opening is connected to said inlet conduit such as to receive water flow therefrom, and wherein the first water flow opening is connected to said outlet conduit such as to deliver water flow thereto, during operation of the chlorinator.

## BRIEF DESCRIPTION OF THE DRAWINGS

In order to better understand the subject matter that is disclosed herein and to exemplify how it may be carried out in practice, examples will now be described, by way of non-limiting example only, with reference to the accompanying drawings, in which:

**Fig. 1** is an isometric front-top-side view of a chlorinator according to an example of the presently disclosed subject matter.
**Fig. 2** is a front view of the example of Fig. 1; **Fig. 2(a)** is a front view of the example of Fig. 2 in which the sampling chamber outer cover is removed.
**Fig. 3** is a side view of the example of Fig. 1.
**Fig. 4** is a top view of the example of Fig. 1.
**Fig. 5** is an isometric rear-top-side cross-sectional view of the housing of the example of Fig. 1, taken about section A-A of Fig. 2.
**Fig. 6** is an isometric front-top-side cross-sectional view of the example of Fig. 1, taken about section A-A of Fig. 2.
**Fig. 7** is an isometric rear-top-side cross-sectional view of the housing of the example of Fig. 1, taken about section B-B of Fig. 3.
**Fig. 8** is an isometric rear-top-side view of an example of the electrode assembly of the example of Fig. 1.
**Fig. 9** is an isometric rear-top-side exploded view of an example of the electrode assembly of the example of Fig. 8.
**Fig. 10** is an isometric front-top-side cross-sectional view of the example of Fig. 1, taken about section C-C of Fig. 3.
**Fig. 11** is an isometric front-top-side cross-sectional view of the example of Fig. 1, taken about section D-D of Fig. 3.
**Fig. 12(a)** is one side view of the example of Fig. 1; **Fig. 12(b)** is the opposite side view of the example of Fig. 12(a).
**Fig. 13** is a top cross-sectional view of the example of Fig. 1, taken about section E-E of Fig. 3.
**Fig. 14** is an isometric rear-top-side cross-sectional view of the example of Fig. 1, taken about section F-F of Fig. 3.
**Fig. 15** is an isometric front-top-side exploded view of an example of Fig. 1; **Fig. 15(a)** is an isometric rear-top-side the sampling chamber outer cover including sensor probes of the example of Fig. 15.

**Fig. 16** is a side cross-sectional view of the example of Fig. 1, taken about section G-G of Fig. 2.
**Fig. 17** is an isometric rear-top cross-sectional view of the housing of the example of Fig. 1, taken about section B-B of Fig. 3.
**Fig. 18** is an isometric rear-top-side cross-sectional view of the housing of an alternative variation of the example of Fig. 7.
**Fig. 19** is a side view of the housing of an alternative variation of the example of Fig. 12(b).
**Fig. 20(a)** is a schematic illustration of a recirculation circuit including the example of Fig. 1 installed in a first installation configuration; **Fig. 20(b)** is a schematic illustration of a recirculation circuit including the example of Fig. 1 installed in a second installation configuration.

## DETAILED DESCRIPTION

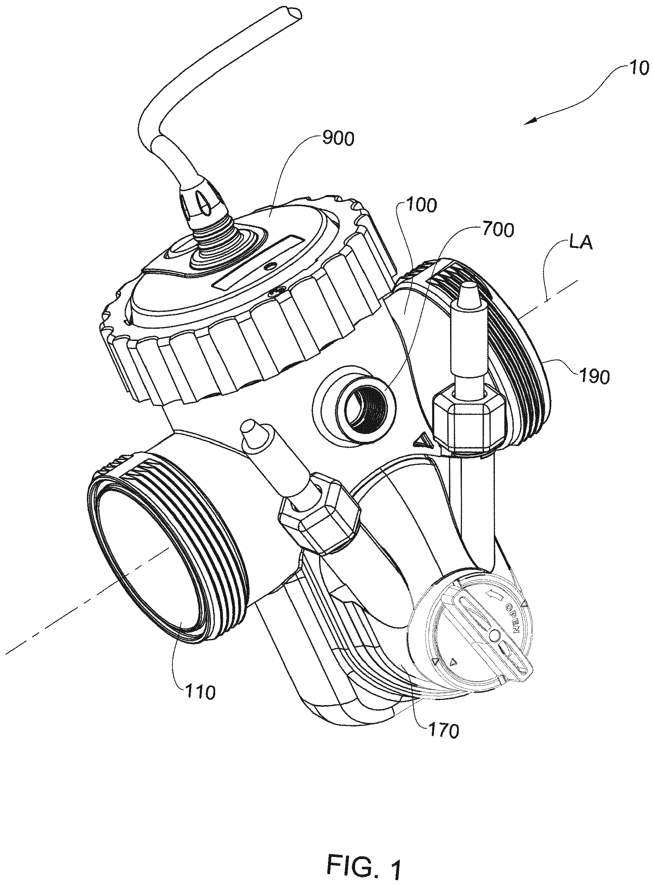

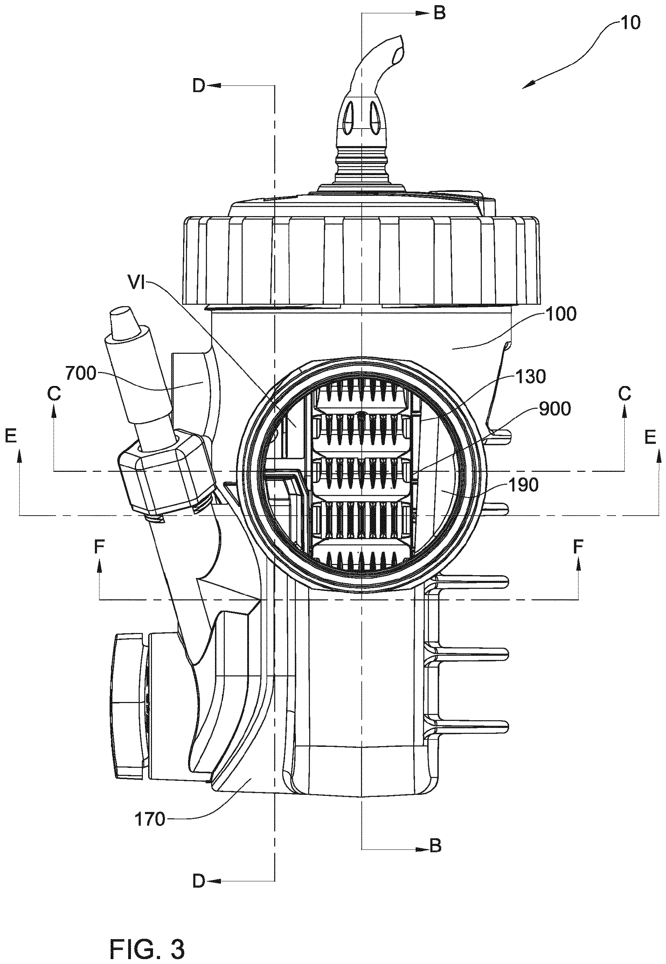

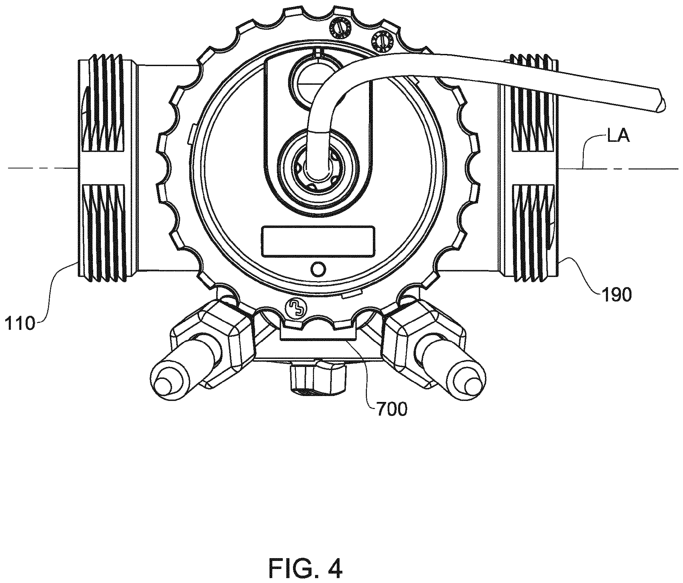

Referring to Figs. 1, 2, 3, 4, a chlorinator (also referred to herein interchangeably as a pool chlorinator) according to a first example of the presently disclosed subject matter, generally designated with reference numeral **10,** comprises a housing **100** and an electrode assembly **900**.

The chlorinator **10** is configured for utilizing electrolysis to produce sanitizing agents from a solute, for example to be supplied to a body of water, for example a swimming pool. For example, the chlorinator **10** can be a salt-water chlorinator, configured to electrolyze salt (NaCl) dissolved in water to produce hypochlorous acid and sodium hypochlorite, as is well known in the art.

Thus, while the chlorinator **10** can be used for sanitizing pool water and thus for use with a pool or the like, it can also be used for providing sanitizing agents to any suitable body of water.

As will become clearer herein, the pool chlorinator **10** is operable, with the electrode assembly **900** accommodated in the housing **100,** to produce one or more sanitizing agents from solute dissolved in water in operation of the chlorinator **10**.

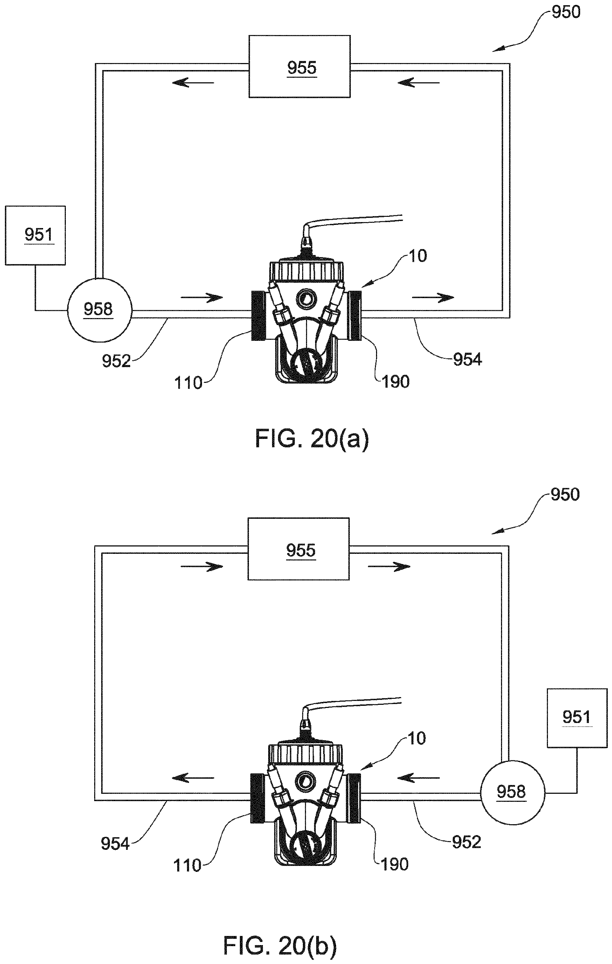

Referring to Fig. 20(a) and Fig. 20(b), the chlorinator **10** can be part of a water recirculation circuit **950,** which thus comprises the pool chlorinator **10** and *inter alia* a pool **955** or other suitable body of water, a pumping system **958,** controller **951,** and inlet conduit **952** and outlet conduit **954.**

In alternative variations of this example, the respective water recirculation circuit can include a plurality of pool chlorinators, for example a plurality of pool chlorinators **10,** which can be coupled to the inlet circuit and outlet conduit in series and/or in parallel.

The housing **100,** which is *per se* novel, is thus configured for use with respect to the chlorinator **10.**

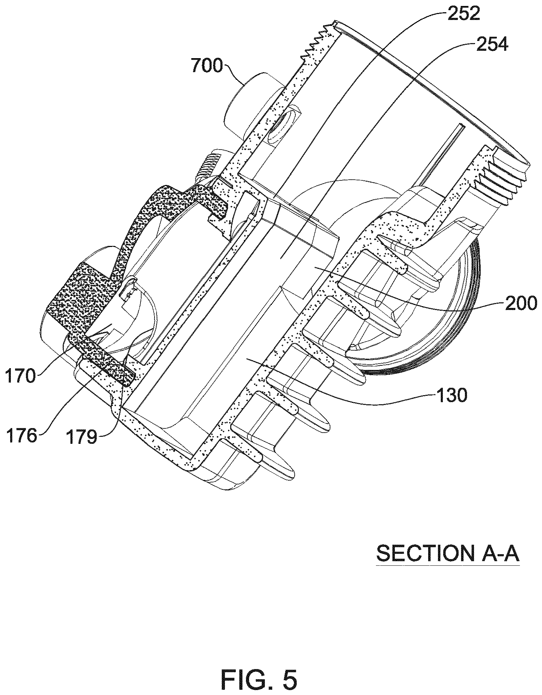

Referring also to Figs. 5, 6, 7, the housing **100** comprises a first water flow opening **110,** a second water flow opening **190,** an electrolysis chamber **130,** a sampling chamber **170,** and a flow stream separator **200.**

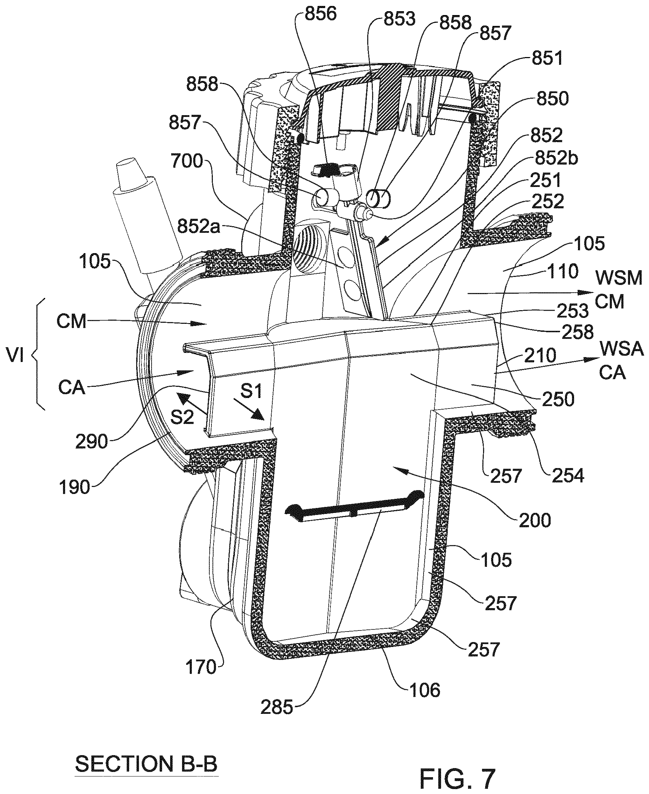

The first water flow opening **110** is axially spaced from the second water flow opening **190.** Referring in particular to Fig. 7, the housing **100** defines a housing internal volume **VI** axially extending between the first water flow opening **110** and the second water flow opening **190.**

A longitudinal axis **LA** (also referred to herein as the centerline) for the housing **100** can be defined extending between the first water flow opening **110** and the second water flow opening **190,** for example passing through the respective centers of the first water flow opening **110** and the second water flow opening **190.**

Herein, and unless otherwise stated, "axially" refers a direction parallel to or coaxial with the longitudinal axis **LA,** while "transverse", "transversely" and so on refer to a direction nominally orthogonal (or at least partially orthogonal) to the longitudinal axis **LA.**

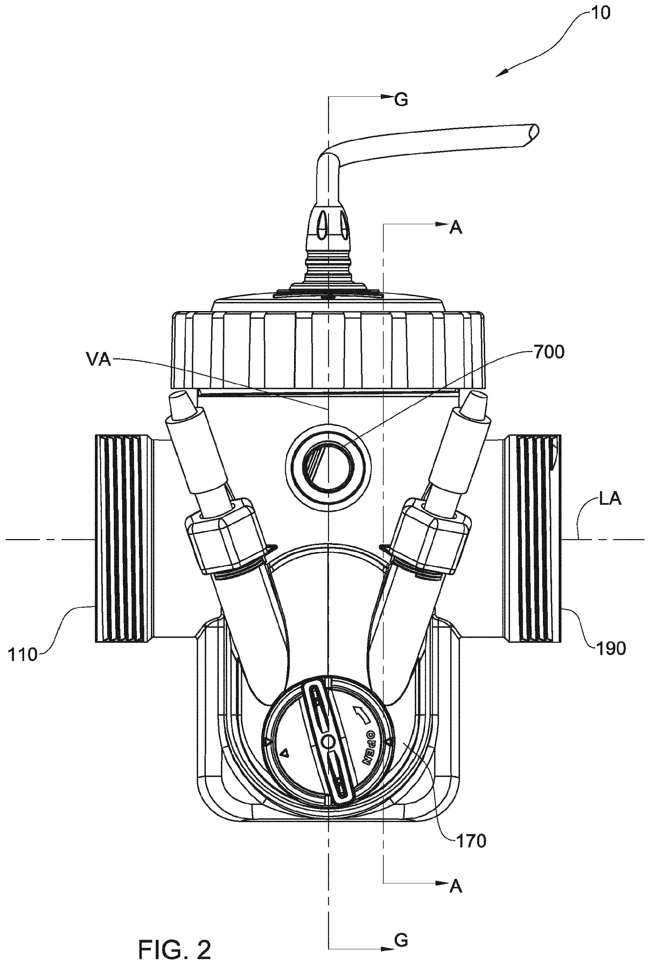

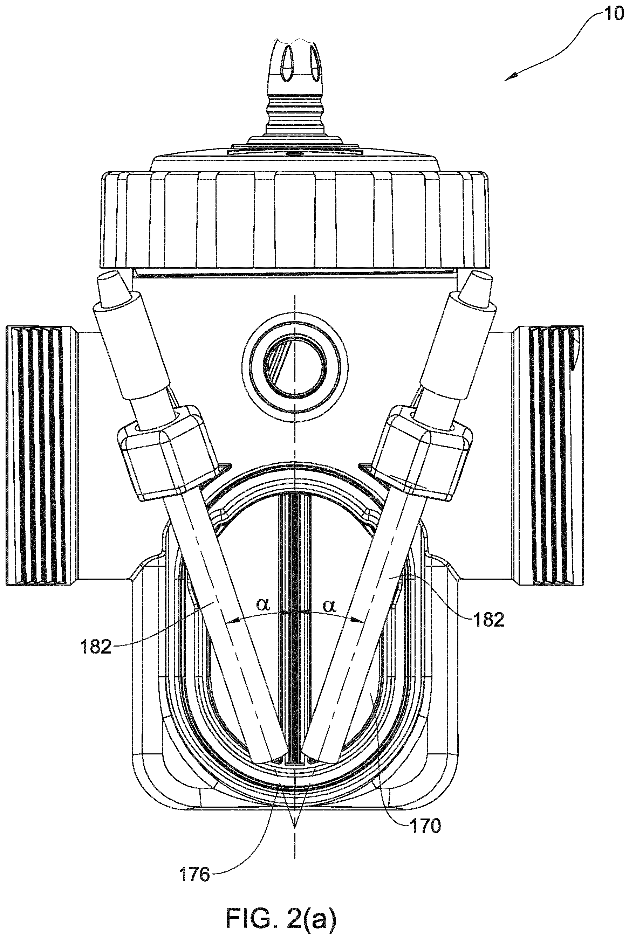

A vertical axis **VA** (Fig. 2) can be defined orthogonal to the longitudinal axis **LA,** in the vertical direction for example with respect to the view of Fig. 2

The first water flow opening **110** and the second water flow opening **190** are each configured for being coupled to a source of water, for example a source of pool water, for example a pool **955** or other suitable body of water (Figs. 20(a), 20(b)) in operation of the chlorinator **10,** for example via the recirculation circuit **950.**

In at least this example, the housing **100** is configured for enabling the chlorinator **10** to be connected to the recirculation circuit **950** in each one of at least two installation configurations, including a first installation configuration and a second installation configuration. This feature can allow flexibility of installation of the pool chlorinator **10** with respect to different configurations of the recirculation circuit **950.**

In the first installation configuration, and referring again to Fig. 20(a), the chlorinator **10** can be connected to the recirculation circuit **950** such that the first water flow opening **110** operates as a water inlet port and the second water flow opening **190** as a water outlet port for the water. Thus the first water flow opening **110** is connected to an upstream portion of the water recirculation circuit **950,** i.e., the inlet conduit **952,** and receives water flow therefrom, while the second water flow opening **190** is connected to a downstream portion of the water recirculation circuit **950,** i.e., outlet conduit **954,** and delivers water flow thereto.

In the second installation configuration, and referring to Fig. 20(b), the chlorinator **10** can be connected to the recirculation circuit **950** such that the second water flow opening **190** operates as a water inlet port and the first water flow opening **110** as a water outlet port for the water. Thus the second water flow opening **190** is connected to an upstream portion of the water recirculation circuit **950,** i.e., inlet conduit **952,** and receives water flow therefrom, while the first water flow opening **110** is connected to a downstream portion of the water recirculation circuit **950,** i.e., outlet conduit **954,** and delivers water flow thereto.

In operation of the chlorinator **10,** water from the recirculation circuit **950** flows into the internal volume **VI,** from the first water flow opening **110** to the second water flow opening **190** (first installation configuration), or from the second water flow opening **190** to the first water flow opening **110** (second installation configuration).

The electrolysis chamber **130** is configured for accommodating therein at least a portion of the electrode assembly **900.**

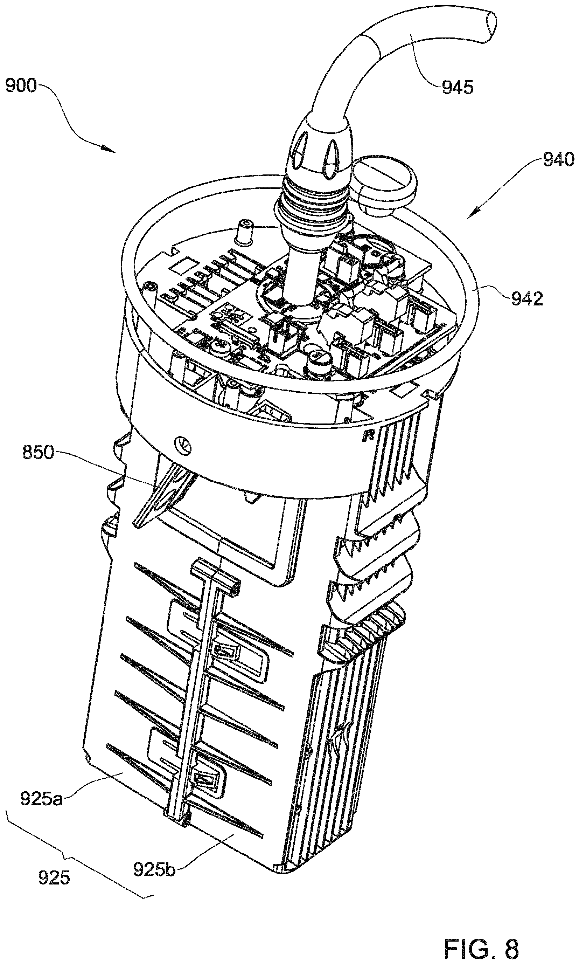

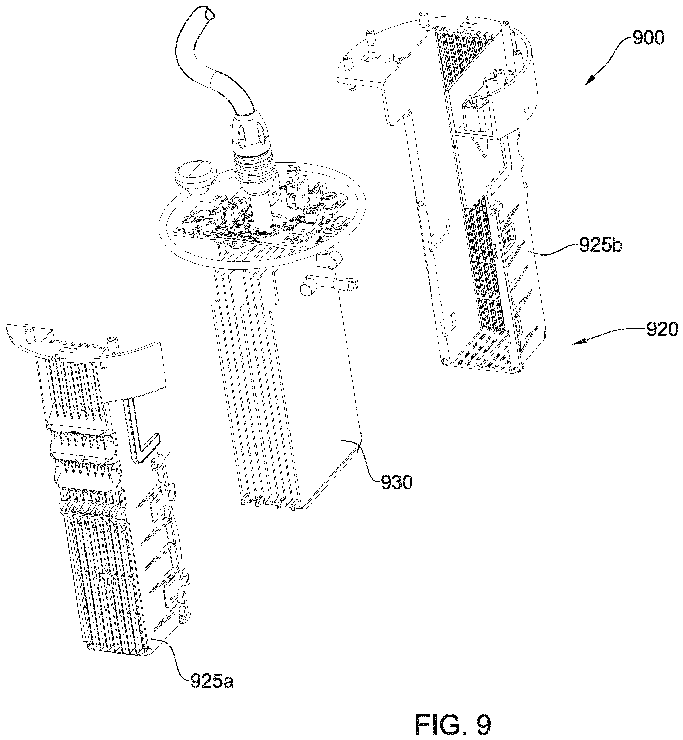

In at least this example, and referring also to Figs. 8 and 9, the electrode assembly **900** comprises an electrolysis cassette **920,** comprising a plurality of electrodes in the form of electrolysis plates **930** (also interchangeably referred to herein as electrodes), and a cassette case **925.** The electrolysis plates **930** are held in adjacent laterally spaced and parallel spatial relationship with respect to one another via cassette case **925,** defining axially and vertically extending lateral gaps between each pair of adjacent electrolysis plates **930,** through which water flows during operation of the chlorinator 10. In at least this example, the cassette case **925** comprises a pair of cassette case halves **925a, 925b** that interconnect together laterally to provide an internal volume for accommodating and aligning therein the electrolysis plates **930.**

The electrode assembly **900** further comprises a control unit **940** configured for controlling and powering the electrolysis cassette **920,** in electrical communication via cable 945 with an external electrical power source, and optionally also in electrical communication via cable 945 with an external controller that can form part of the water recirculation circuit **950.**

The electrode assembly **900** further comprises a sealing member **942,** such as for example a gasket or O-ring, provided to seal between the hosing internal volume **VI** and the control unit **940,** and thus prevent ingress of water into the control unit **940** from inside the housing **100** during operation of the chlorinator **10.**

In operation of the chlorinator **10,** the electrolysis plates **930** are configured for providing electricity to the water within the electrolysis chamber **130** for electrolysis thereof, as controlled by the control unit **940,** for example as described herein.

In at least this example, the control unit **940** is configured to direct operation of components of the chlorinator **10.** For example, it can collect information from the electrode assembly **900,** regulate power supply thereto (which can include, but is not limited to, one or more of determining the amount and/or polarity of electricity for supplying to the electrolysis cassette, requesting suitable power from the power supply, verifying power received, etc.), receive user commands, and provide information for display thereby.

Accordingly, the control unit **940** can comprise, for example, a printed circuit board, comprising one or more microcontrollers configured to facilitate the directing, as well as any suitable memory modules, sensors, output connectors, power connectors, etc., which may be necessary.

The control unit **940** can be further configured to monitor the internal temperature of the control unit **940,** and to operate to lower the power output of the power supply in order to prevent damage to the control unit **940,** without ceasing the electrolytic production of sanitizing agents (it will be appreciated that the power supply may be configured to perform this function without direction from the control unit **940,** for example being provided with a suitable dedicated controller configured therefor).

It will be appreciated that while in at least this example, the control unit **940** as a single element, in alternative variations of this example, the control unit **940** can comprise a combination of elements, which are or which are not in physical proximity to one another, without departing from the scope of the presently disclosed subject matter.

The cassette case **925,** in at least this example, defines an outer shape that is generally in the form of a rectangular cuboid form (right rectangular prism).

Correspondingly, and in at least this example, the electrolysis chamber **130** has a complementarily-shaped internal volume corresponding to shape of the portion of the electrode assembly **900** that is to be accommodated therein. In at least this example, the electrolysis chamber **130** is provided within the internal volume **VI** and is contiguous with other parts of the internal volume **VI,** without the need for dedicated physical internal walls to demarcate the electrolysis chamber **130** from the remainder of the internal volume **VI.**

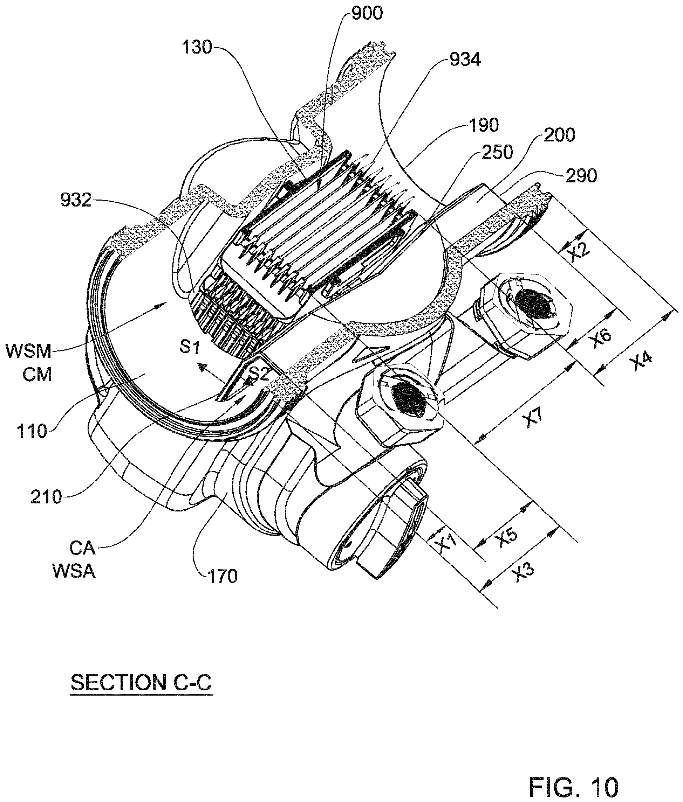

Nevertheless, and referring also to Fig. 10, the electrolysis chamber **130** can be considered to axially extend between a first electrolysis chamber axial end **932** and a second electrolysis chamber axial end **934,** sufficient for accommodating therein an axial dimension of the electrode assembly **900,** and in particular sufficient for accommodating an axial dimension of the portion of the electrolysis cassette **920** therein. The first electrolysis chamber axial end **932** is thus in free fluid communication with the first water flow opening **110,** while the second electrolysis chamber axial end **934** is in free fluid communication with the second water flow opening **190.**

Furthermore, in at least this example, the first electrolysis chamber axial end **932** is facing the first water flow opening **110,** while the second electrolysis chamber axial end **934** is facing the second water flow opening **190.**

As will become clearer herein, the sampling chamber **170** is configured for selectively enabling sampling of water entering the housing **900** in operation of the pool chlorinator **10.**

According to an aspect of the presently disclosed subject matter, and referring in particular to Fig. 7, the flow stream separator **200** comprises a first partition edge **210,** a second partition edge **290** and a partition wall **250,** the partition wall **250** axially extending between the first partition edge **210** and the second partition edge **290.**

In at least this example, the partition wall **250** is laterally and vertically offset with respect to the longitudinal axis **LA.**

The partition wall **250** is a water impermeable physical wall, in at least this example in the form of a solid wall, that separates at least a central portion of the housing internal volume **VI** into a main channel **CM** and an auxiliary channel **CA.**

The partition wall **250** is connected to an inner surface of the housing **100** in a sealed manner transversely, such as to prevent any cross-flow between the main channel **CM** and the auxiliary channel **CA,** at any location between first partition edge **210** and the second partition edge **290.** Thus, the flow stream separator **200** is configured for preventing any transverse cross-flow between the main channel **CM** and the auxiliary channel **CA,** at any axial location between the first partition edge **210** and the second partition edge **290.** Without being bound to theory, the inventors consider that prevention of any such potential cross-flow can prevent or minimize contamination of the auxiliary channel **CA** (and thus of the sampling chamber) from the main channel **CM.**

Referring in particular to Figs. 7 and 10, the main channel **CM** extends axially between the first partition edge **210** and the second partition edge **290,** and wholly accommodates therein, i.e., in an axial direction parallel to the longitudinal axis **LA,** the electrolysis chamber **130** on a first side **S1** of the partition wall **250.**

The auxiliary channel **CA** extends axially between the first partition edge **210** and the second partition edge **290** and wholly accommodates therein, i.e., in an axial direction parallel to the longitudinal axis **LA,** the sampling chamber **170** on a second side **S2** of the partition wall **250.**

The flow separator **200** is configured, in operation of the chlorinator **10,** for separating at the first partition edge **210** water flowing into the housing **100** via the first water flow opening **110** into a main water stream **WSM** flowing through the main channel **CM** and an auxiliary water stream **WSA** flowing through the auxiliary channel **CA,** i.e., in the aforesaid first installation configuration.

Similarly, the flow separator **200** is further configured, in operation of the chlorinator, for separating at the second partition edge **290** water flowing into the housing **100** via the second water flow opening **190** into a respective main water stream **WSM** flowing through the main channel **CM** and a respective auxiliary water stream **WSA** flowing through the auxiliary channel **CA,** i.e., in the aforesaid second installation configuration.

In at least this example, the partition wall **250** transversely separates (with respect to the longitudinal axis **LA)** the internal volume **VI** into the main channel **CM** and the auxiliary channel **CA.** Thus, the main channel **CM** wholly accommodates therein the electrolysis chamber **130** on a first transverse side of the partition wall **250,** while the auxiliary channel **CA** wholly accommodates therein the sampling chamber **170** on a second transverse side of the partition wall, the second transverse side being opposite facing with respect to the first transverse side.

Referring to Fig. 10, in at least this example the first partition edge **210** extends away from the first electrolysis chamber axial end **932** towards the first water flow opening **110.** In at least this example the first partition edge **210** is spaced form the first water flow opening **110** by a first axial spacing **X1**.

Similarly, the second partition edge **290** extends away from the second electrolysis chamber axial end **934** and towards the second water flow opening **190.** In at least this example the second partition edge **290** is spaced form the second water flow opening **190** by a second axial spacing **X2.**

In at least this example, the first axial spacing **X1** is equal to the second axial spacing. Moreover, in at least this example, both the first axial spacing **X1** and the second axial spacing **X2** are non-zero.

However, it is to be noted that in at least some alternative variations of this example, only one of the first axial spacing **X1** and the second axial spacing **X2** can be non-zero, while the other one of the first axial spacing **X1** and the second axial spacing **X2** is zero. In yet other alternative variations of this example, the first axial spacing **X1** and the second axial spacing **X2** can be non-equal with respect to one another. In yet other alternative variations of this example, both the first axial spacing **X1** and the second axial spacing **X2** can be zero. In such cases where the first axial spacing **X1** and/or the second axial spacing **X2** can be zero, the respective the first partition edge **210** and/or the respective second partition edge **290** are each aligned with a respective plane defined at the outer edge of the respective first water flow opening **110** or the respective second water flow opening **190.** In yet other alternative variations of this example, the first axial spacing **X1** and/or the second axial spacing **X2** can have a negative value, in which case the respective first partition edge **210** and/or the respective second partition edge **290** respectively project out of the housing **100** via the respective first water flow opening **110** or the respective second water flow opening **190;** in such cases, the respective first partition edge **210** and/or the respective second partition edge **290** project into the respective portion of the conduits of the recirculation circuit **950,** for example inlet conduit **952** or outlet conduit **954,** that is connected to the first water flow opening **110** or the second water flow opening **190,** respectively.

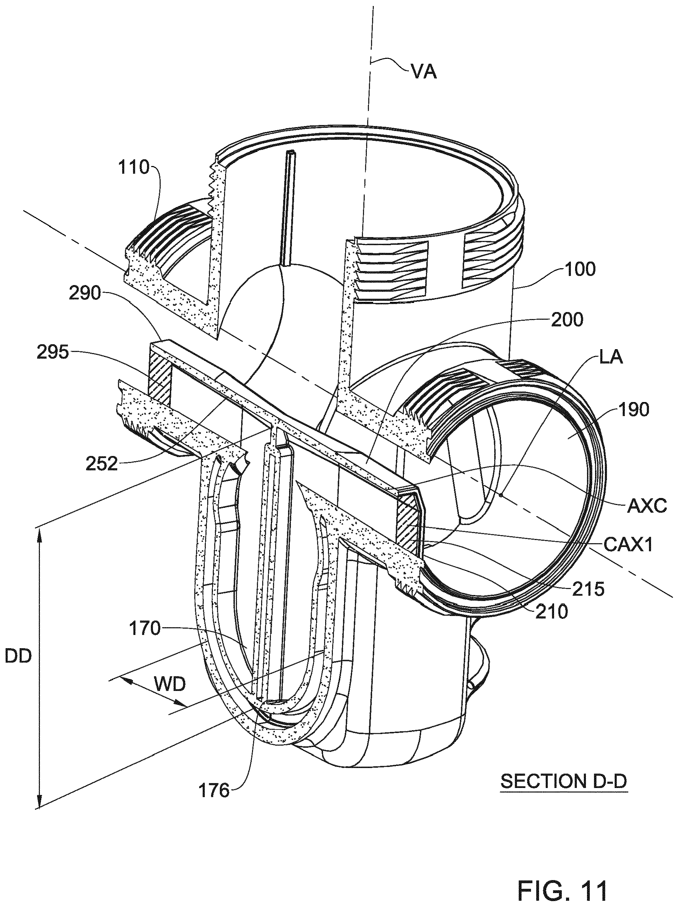

Referring in particular to Fig. 11, the partition wall **250** has a wall axial cross-section **AXC** parallel to a longitudinal axis **LA** of the housing **100.**

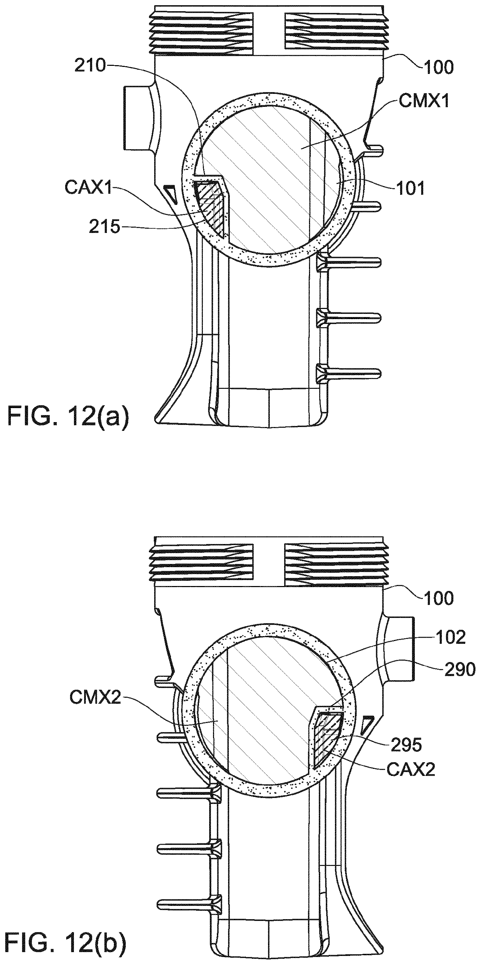

Furthermore, and referring in particular to Fig. 11 and Fig. 12(a), the first partition edge **210** defines a first auxiliary channel opening **215;** in particular, the first partition edge **210** defines the location of the first auxiliary channel opening **215** in an axial manner. In at least this example, the first auxiliary channel opening **215** is defined orthogonal to the longitudinal axis **LA** and is at the axial location of the first partition edge **210.**

In any case, the first auxiliary channel opening **215** has a first auxiliary channel transverse cross-sectional area **CAX1,** and a first main channel opening **101** having a first main channel transverse cross-sectional area **CMX1.** For example, the first auxiliary channel transverse cross-sectional area **CAX1** and the first main channel transverse cross-sectional area **CMX1** can be taken along a plane orthogonal to the longitudinal axis **LA** at the axial location of the first partition edge **210.** In at least one implementation of this example, the first auxiliary channel transverse cross-sectional area **CAX1** can be about $3174mm^2$ and the first main channel transverse cross-sectional area **CMX1** can be about $241mm^2$, and thus the respective ratio of said first main channel transverse cross-sectional area **CMX1** to the first auxiliary channel transverse cross-sectional area **CAX1** is about 13.2. In at least this or other examples, the respective ratio of the first main channel transverse cross-sectional area **CMX1** to the first auxiliary channel transverse cross-sectional area **CAX1** can be in the range between about 7 to about 15, for example any one of: 15, 14, 13, 12, 11, 10, 9, 8, 7.

Referring in particular to Fig. 11 and Fig. 12(b), the second partition edge **290** defines a second auxiliary channel opening **295;** in particular, the second partition edge **290** defines the location of the second auxiliary channel opening **295** in an axial manner. In at least this example, the second auxiliary channel opening **295** is defined orthogonal to the longitudinal axis **LA** and is at the axial location of the second partition edge **290.**

In any case, the second auxiliary channel opening **295** has a second auxiliary channel transverse cross-sectional area **CAX2,** and a second main channel opening **102** having a second main channel transverse cross-sectional area **CMX2.** For example, the second auxiliary channel transverse cross-sectional area **CAX2** and the second main channel transverse cross-sectional area **CMX2** can be taken along a plane orthogonal to the longitudinal axis **LA** at the axial location of the second partition edge **290.** In at least one implementation of this example, the second auxiliary channel transverse cross-sectional area **CAX2** can be about $3174mm^2$ and the second main channel transverse cross-sectional area **CMX2** can be about $241mm^2$, and thus the respective ratio of said second main channel transverse cross-sectional area **CMX2** to the second auxiliary channel transverse cross-sectional area **CAX2** is about 13.2. In at least this or other examples, the respective ratio of the second main channel transverse cross-sectional area **CMX2** to the second auxiliary channel transverse cross-sectional area **CAX2** can be in the range between about 7 to about 15, for example any one of: 15, 14, 13, 12, 11, 10, 9, 8, 7.

As best seen in Fig. 7, the partition wall **250** in at least this example has an inverted L-shaped axial cross-sectional shape, including a first partition wall portion **252** and a second partition wall portion **254.** However, in alternative variations of this example, the partition wall **250** can have any suitable cross-section shape that prevents lateral flow between the main channel **CM** and the auxiliary channel **CA** in a vertical direction (parallel to the vertical axis **VA)** and also in a horizontal direction (for example orthogonal to the vertical axis **VA** and to the longitudinal axis **LA);** for example, the partition wall in such examples can have an inverted J-shaped axial cross-sectional shape - for example the first partition edge **210** and the second partition edge can each be arcuate in cross-section.

In at least this example, the first partition wall portion **252** extends axially between the first partition edge **210** and the second partition edge **290,** and comprises a first lateral edge **251** fixedly connected to an upper portion of the internal wall surface **105** of the housing **100,** and a second lateral edge **253** fixedly joined to the second partition wall portion **254.** The first wall portion **252** essentially prevents lateral flow between the main channel **CM** and the auxiliary channel **CA** at least in a vertical direction.

The first partition wall **252** thus extends horizontally from the second partition wall **254** to the side of the upper portion of the internal wall surface **105.**

The second partition wall portion **254** extends axially between the first partition edge **210** and the second partition edge **290,** and comprises a first lateral edge **257** fixedly connected to a lower portion **106** of the internal wall surface **105** of the housing **100,** and a second lateral edge **258** fixedly joined to the second partition wall portion **254,** for example to the second lateral edge **253** thereof. The second wall portion **254** essentially prevents lateral flow between the main channel **CM** and the auxiliary channel **CA** at least in a horizontal direction.

The second partition wall **254** thus extends vertically from the first partition wall 252 to the bottom of the lower portion of internal wall surface **105.**

Thus, in at least this example, the partition wall **250** extends from the inner surface **105** of the housing **100,** in both a horizontal direction and in a vertical direction.

Referring again to Fig. 10, the first electrolysis chamber axial end **932** is axially spaced with respect to the first water flow opening by a third axial spacing **X3,** and the second electrolysis chamber axial end **934** is axially spaced with respect to the second water flow opening **190** by a fourth axial spacing **X4.** For example, a ratio of said first axial spacing **X1** to said third axial spacing **X3** is in any one of the following ranges: 0.2 to 0.8; 0.5 to 0.7; 0.2 to 0.5. For example, a ratio of said second axial spacing **X2** to said fourth axial spacing **X4** is in any one of the following ranges: 0.2 to 0.8; 0.5 to 0.7; 0.2 to 0.5.

In at least these examples, the first partition edge **210** projects axially away from, and is thus axially spaced from, the first electrolysis chamber axial end **932** by a fifth axial spacing **X5,** wherein:

$$X5 = X3 - X1$$

In at least these examples, the second partition edge 290 projects axially away from, and is thus axially spaced from, the second electrolysis chamber axial end **934** by a sixth axial spacing **X6,** wherein:

$$X6 = X4 - X2$$

It is to be noted that the electrolysis chamber **130** also has a seventh axial spacing **X7,** between the first electrolysis chamber axial end **932** and the second electrolysis chamber axial end **934;** the seventh axial spacing **X7** thus defines an axial dimension of the electrolysis chamber **130.**

Referring again to Fig. 7, the partition wall **250,** in particular the second partition wall portion **254,** comprises a shoulder or ridge **285** that acts as a stop for engaging with the electrode assembly **900** and facilitating engagement and/or positioning of the electrode assembly **900** with the housing **100.**

As disclosed above, the housing **100** comprises sampling chamber **170,** and the flow separator **200** operates, in operation of the chlorinator, to separate water flowing into the housing **100** (in the aforesaid first installation configuration - via the first water flow opening **110;** in the aforesaid second installation configuration - via the second water flow opening **190)** into the main water stream **WSM** and the auxiliary water stream **WSA.** The main water stream **WSM** flows through the main channel **CM** and thus through the electrode chamber **130** (and thus through the electrode assembly **900).** The auxiliary water stream **WSA** flows through the auxiliary channel **CA** and thus through the sampling chamber **170.**

The auxiliary channel **CA** extends axially between the first auxiliary channel opening **215** defined at the first partition edge **210,** and the second auxiliary channel opening **295** defined at the second partition edge **290.** The sampling chamber **170** is axially wholly accommodated in the auxiliary channel **CA,** i.e., the sampling chamber **170** is wholly accommodated axially between the first auxiliary channel opening **215** and the second auxiliary channel opening **295** (i.e., the sampling chamber **170** is axially wholly accommodated in an axial direction parallel to the longitudinal axis **LA,** axially between the first partition edge **210,** and the second partition edge **290**), on a second side **S2** of the partition wall **250.** In other words, there are no sampling ports or sensors provided in the sampling chamber **170** (or in the housing **100**) other than axially between the first auxiliary channel opening **215** and the second auxiliary channel opening **295,** i.e., axially between the first partition edge **210** and the second partition edge **290.**

The sampling chamber **170** is configured for enabling sampling of the auxiliary water stream **WSA** during operation of the chlorinator **10.** Such sampling can be carried out for the purpose of determining one or more of predetermined water parameters relating to the auxiliary water stream **WSA,** and thus to the water flowing through the chlorinator **10.** Without being bound to theory, inventors consider that the flow separator **200** separates the incoming water into the main water stream **WSM** and the auxiliary water stream **WSA** sufficiently upstream of the electrode assembly **900,** such that electrolysis operation of the electrode assembly **900** will not significantly affect the aforementioned water parameters of the auxiliary water stream **WSA,** while such operation is considered to significantly affect at least some of the water parameters of the main water stream **WSM.** Thus, it is possible to conduct such sampling concurrent with the electrode assembly **900** operating to provide electrolysis.

For example, such water parameters are generally considered to provide indications of quality of water flowing through the chlorinator **10,** and can include for example one or more of the following: pH, temperature, salinity, chlorine level, oxidation/reduction (ORP) potential, level of contaminants in the water, and so on.

The water parameters are sensed via corresponding sensors **180** that are operatively coupled to a suitable controller, for example the control unit **940** and/or an external controller, for example controller **951** that forms part of the water recirculation circuit **950.**

In at least this example, the sensors **180** are in the form of respective sensor probes **182** that are elongate and have a respective longitudinal first end **181** and a respect longitudinal second end **183.** Each first end **181** comprises the sensor sensing end, and is configured to enable the sensor **180** to become in contact with the auxiliary water stream **WSA** in the sampling chamber **170** during operation of the chlorinator **10.** Each second end **183** is configured for transmitting a signal to the controller, for example the control unit **940** and/or an external controller, for example controller **951** that forms part of the water recirculation circuit **950,** indicative of a value of the water parameter being sensed by the respective sensor **180.**

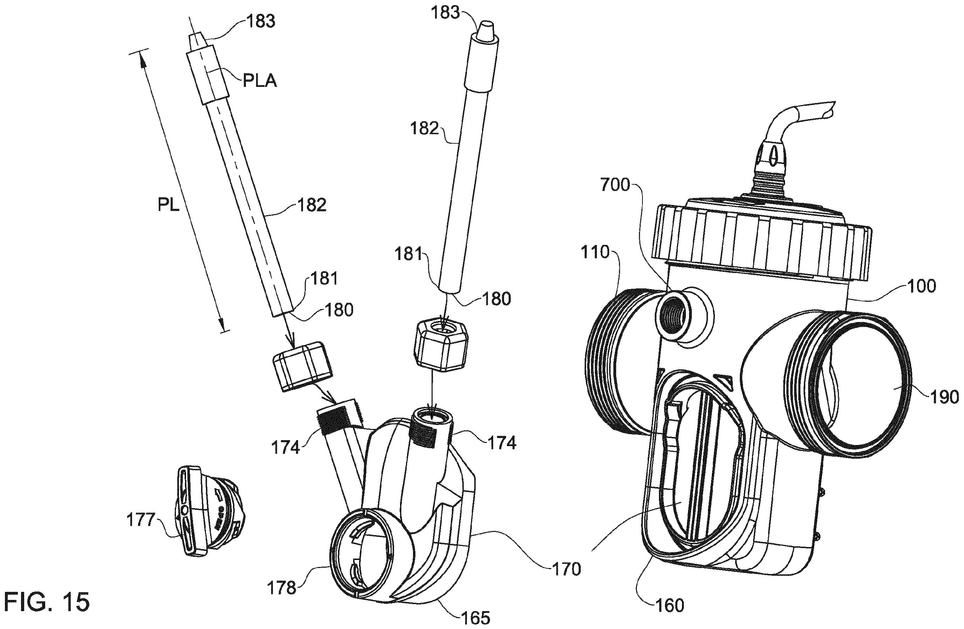

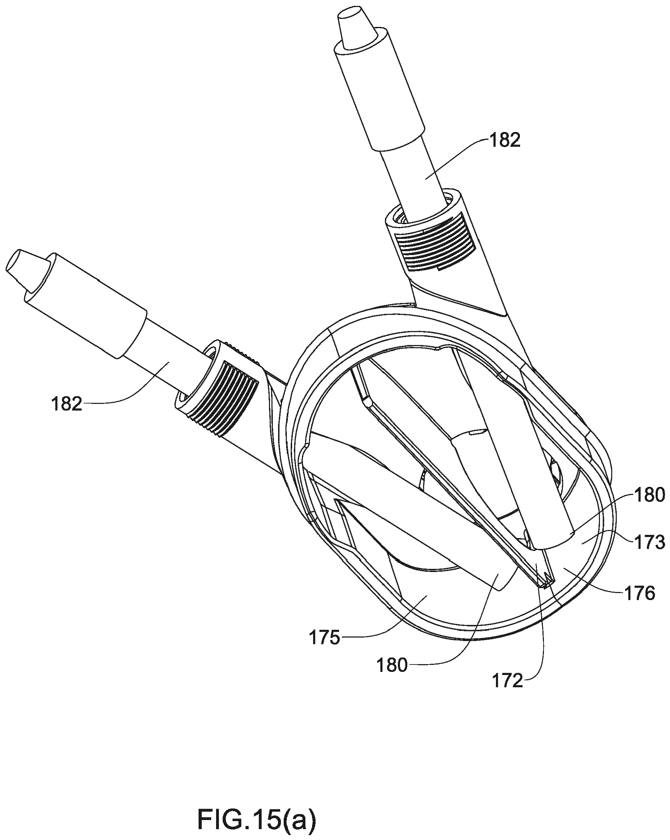

In at least some examples, and referring for example to Fig. 11 and Fig. 15, each sensor probe **182** can have a longitudinal length **PL** (for example between 15cm and 20cm, for example 15.6cm), and the sampling chamber **170** has a depth dimension **DD** (along the vertical axis **VA**). In at least this this example, the depth dimension **DD** is such to enable accommodating therein that more than 50% of the probe longitudinal length **PL,** for example, more than any one of 40%, 45%, 50%, 55%, 60% of the probe longitudinal length **PL.**

Referring in particular to Fig. 11, the sampling chamber **170** has a with dimension **WD** (parallel to the longitudinal axis **PA**). In at least this example, the depth dimension **DD** is greater than the with dimension **WD.** In at least one implementation of this example, the depth dimension **DD** is about 70mm, and the with dimension **WD** is about 95mm, such that the respective ratio of the depth dimension **DD** to the with dimension **WD** is about 1.4. In this or other examples, the respective ratio of the depth dimension **DD** to the with dimension **WD** can be in the range for example from about 1.2 to about 2.5.

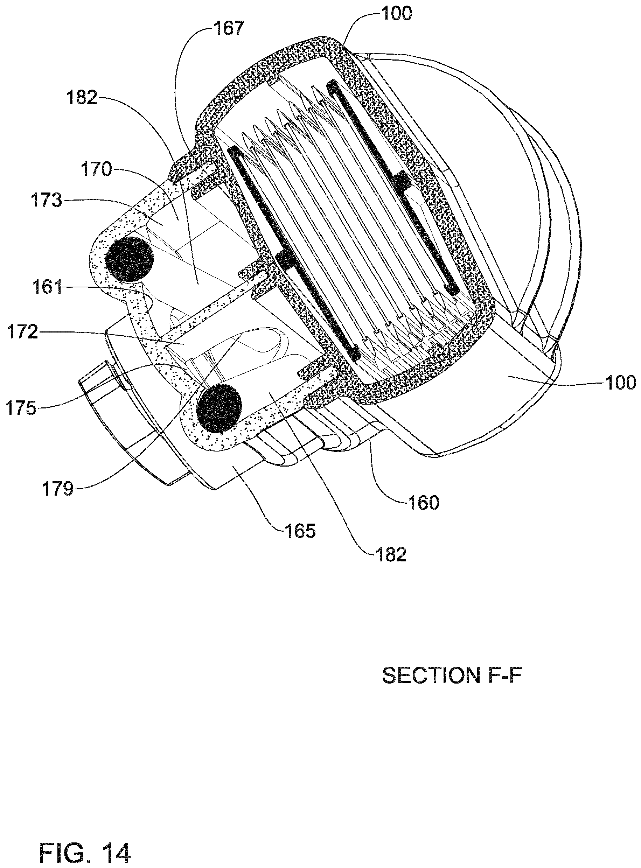

In at least this example, and as can be best seen in Fig. 2(a), Fig. 13, Fig. 14 and Fig. 15(a), the two sensor probes **182** are accommodated within the sampling chamber **170,** one in each of the two sub-chambers **173, 175** of the sampling chamber **170.**

In at least this example, and as can be best seen in Fig. 2(a), the two sensor probes **182** are accommodated within the sampling chamber **170** in a near vertical direction. For example the longitudinal axis **PLA** of each sensor probe **182** is at an angle α to the vertical axis VA, when viewed from the front, for example as in Fig. 2 or Fig. 2(a). For example, in at least this example, angle α is in the range 0° to ±25°, for example ±20°, and in alternative variations of this example, the inclination angle α can be in the range 0° to ±45°.

While in the illustrated example two sensors **180** are illustrated, in alternative variations of this example the sampling chamber **170** can be configured for receiving only one sensor, or more than two sensors, each of which can be provided at the respective first end of the respective sensor probe, or via any other suitable arrangement.

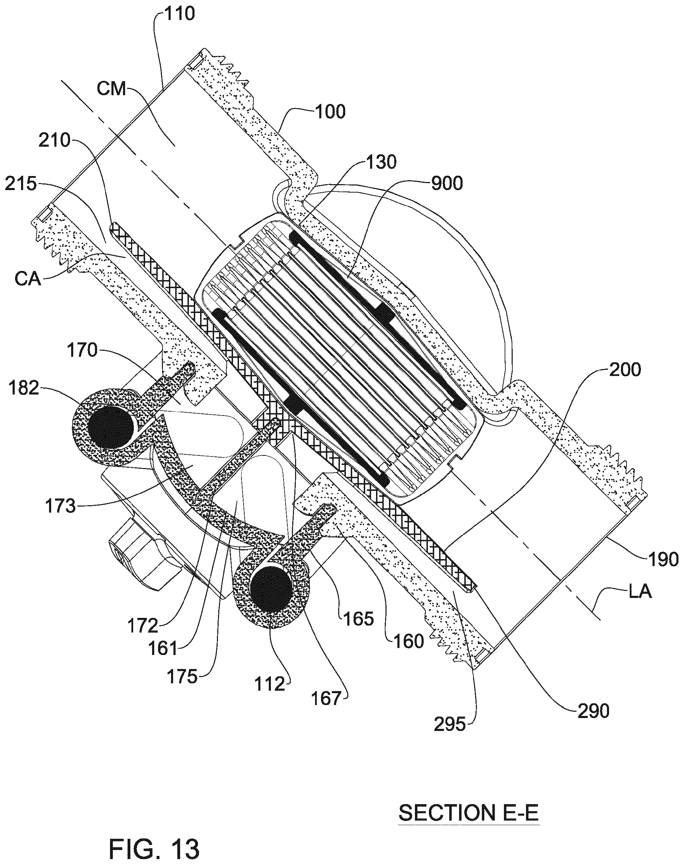

As best seen in Fig. 13, the sampling chamber **170** is laterally displaced with respect to the electrolysis chamber **130.**

Referring to Fig. 13, Fig. 14, and Fig. 15, in at least this example, the sampling chamber **170** is provided by a front portion of the housing **100.** For convenience in manufacture, for example, the sampling chamber **170** can be defined between a suitably molded front portion **160** of the housing **100** and a suitably molded sampling chamber outer cover **165.** As best seen in Fig. 13, the front portion **160** of the housing **100** and the sampling chamber outer cover **165** couple together in a water-tight manner to define therebetween the sampling chamber **170.**

In at least this example, the sampling chamber **170** optionally comprises a laterally disposed access hatch **178** that can be selectively sealingly closed or opened via cap **177.**

The sampling chamber **170** is separated into two halves, referred to herein as sub-chambers **173, 175,** via a flow diverter in the form of sampling chamber wall **172.** The sampling chamber wall **172** acts as a barrier wall inside the sampling chamber, and transversely projects in the auxiliary channel **CA** with respect to the longitudinal axis **LA** of the housing **100.** In at least this example, the sampling chamber wall **172** acts as a barrier wall inside the sampling chamber, and transversely projects away from the second side of the partition wall **250.**

Thus, the sampling chamber wall **172** essentially extends laterally between the respective facing inside surfaces **161, 167** of the front portion **160** of the housing **100** and the sampling chamber outer cover **165**, the inside surface **167** being of the second partition wall portion **254**. The sampling chamber wall **172** also essentially extends vertically between an underside of the first partition wall portion **252** and the bottom portion of the internal wall surface **105**. An opening **179** is provided in the sampling chamber wall **172**, allowing water to flow between the two halves of the sampling chamber **170**. The opening **179** is provided at a lower part of the sampling chamber wall **172**, close to the position of the sensors **180**.

The sampling chamber **170** comprises a plurality of ports **174**, each port **174** being configured for enabling a sensor **180**, via the respective sensor probe **182**, to be introduced into the sampling chamber **170** from an outside of the housing **100**. In at least some alternative variations of this example, the respective sampling chamber comprises a single sampling port, configured for enabling a sensor to be introduced into the sampling chamber **170** from an outside of the housing.

The sampling chamber wall **172** also functions as a flow diverter, configured for causing the auxiliary water stream **WSA** to change direction by an angle greater than 60°, and typically about 80° ±10° when flowing through the auxiliary channel **CA,** from the first auxiliary channel opening **215** and into the adjacent half of the sampling chamber **170** (in the first installation configuration), or from the second auxiliary channel opening **295** and into the other adjacent half of the sampling chamber **170** (in the second installation configuration).

The opening **179** allows water to flow from one half of the sampling chamber **170** to the other half of the sampling chamber **170**. The water flowing through the opening **179** essentially changes direction by nominally 180°.

In the first installation configuration, the auxiliary water stream **WSA** enters the auxiliary channel **CA** at the first auxiliary channel opening **215** and into the respective adjacent half of the sampling chamber **170,** and is then diverted by the sampling chamber wall **172** through the opening **179** and into the other half of the sampling chamber **170,** and then out of the auxiliary channel **CA** via the second auxiliary channel opening **295**.

In the second installation configuration, the auxiliary water stream **WSA** enters the auxiliary channel **CA** at the second auxiliary channel opening **295** and into the respective adjacent half of the sampling chamber **170,** and is then diverted by the sampling chamber wall **172** through the opening **179** and into the other half of the sampling chamber **170,** and then out of the auxiliary channel **CA** via the first auxiliary channel opening **215**.

It is to be noted that in the aforesaid arrangement of the sampling chamber **170,** in which the sampling chamber wall **172** acts as a barrier wall inside the sampling chamber, such an arrangement can operate to provide a drop in pressure in the sampling chamber **170,** and thus in the auxiliary channel **CA,** between the first auxiliary channel opening **215** and the second auxiliary channel opening **295**. This pressure drop can also result in a reduction in the flow velocity of the auxiliary water stream **WSA** in the auxiliary channel **CA,** which can be beneficial in terms of facilitating operation of the sensors in the sampling chamber **170**.

It is also to be noted that in the aforesaid arrangement of the sampling chamber **170,** the sampling chamber **170** is essentially configured with a first passage (sub-chamber **173** or sub-chamber **175,** depending in the flow direction (i.e., corresponding to the first installation configuration or the second installation configuration)) configured for essentially forcing the flow of water from the auxiliary water stream **WSA** entering the auxiliary channel **CA** to the bottom **176** of the sampling chamber **170,** and with a second passage (the other one of sub-chamber **173** or sub-chamber **175**) configured for essentially forcing the flow of water from the bottom of the sampling chamber **170,** and out of the auxiliary channel **CA.**

As such, at least a lower section of the first passage and the second passage (i.e., the blower section of the chamber **173** and sub-chamber **175,** functions as a water trap (also referred to as a "siphon"), essentially trapping therein a volume of water. Such a lower section is at least of a height dimension along the vertical axis **VA** such as to include at least the sensing ends of the sensor probes **182.**

This water trap feature can ensure that water remains trapped in the aforesaid lower section, even if the level of water in the internal volume **VI** reaches the lowermost point of the inlet end **110** or the outlet end **190**. Such a reduction of the water level can occur, for example, when the reticulation circuit **950** is being depleted of water.

Thus, in at least this example, in operation of the chlorinator **10,** the chlorinator **10** is oriented such that the bottom **176** of the sampling chamber **170** is gravitationally below the main channel **CM.** Furthermore, in at least this example the chlorinator **10** is oriented such that the bottom **176** of the sampling chamber **170** is gravitationally below the acid port **700.**

In at least some examples, it can be beneficial for the sensing ends of the sensor probes **182** to be continually immersed in water.

In alternative variations of at least the above examples, the sampling chamber can include a U-tube arrangement, in which one arm of the "U" corresponds to the sub-chamber **173,** and the other arm of the "U" corresponds to the sub-chamber **175,** and in which the respective sensor probes are accommodated one in each of the two arms.

According to a second aspect of the presently disclosed subject matter, and referring again in particular to Figs. 1 to 7, and Fig. 15, the housing **100** comprises an acid port **700** and a sampling chamber shielding arrangement.

The acid port **700** is configured for selectively enabling introduction of an acid therethrough and into the electrolysis chamber **130.** In particular, the acid port **700** is configured for selectively enabling introduction of an acid therethrough and transversely directly into the electrolysis chamber **130.**

The acid port **700** has an entry side projecting outside of the housing **100,** and an exit side projecting directly into the housing **100.** In particular, the exit side of the acid port **700** is laterally directly facing the electrode chamber **190.**

For example, the acid port **700** can be selectively connected to a source of acid at least when it is necessary to top up the housing internal volume **VI** with such acid. Optionally, the acid port **700** can be closed with a suitable cap (not shown) when it is not necessary to provide additional acid to the internal volume **VI.**

Such an acid can be utilized for regulating the level of pH in the internal volume **VI,** and particularly in the main channel **CM,** and can reduce scaling on the electrolysis plates **930** of the electrode assembly **900.** Such an acid can include hydrochloric acid (HCl) or any other suitable acid, for example.

In operation of the chlorinator **10,** such acid can be introduced into the main channel **CM** of the internal volume **VI,** when there is an absence of water flowing through the chlorinator **10.**

While in this example the housing **100** comprises a single acid port **700,** in alternative variations of this example, the housing **100** can instead comprise a plurality of acid ports, each being configured for selectively enabling introduction of an acid therethrough and into the electrolysis chamber **130.**

According to the second aspect of the presently disclosed subject matter, the sampling chamber shielding arrangement is configured for minimizing or preventing spill of the acid into the sampling chamber **170** following introduction of the acid into the housing **100** via the at least one acid entry port **700.**

The sampling chamber **170** is transversely separated from the at least one acid entry port **700** by the sampling chamber shielding arrangement.

The sampling chamber shielding arrangement is configured for preventing transverse fluid communication therethrough, in particular for preventing transverse fluid communication through the shielding arrangement between the at least one acid entry port **700** and the sampling chamber **170.**

In particular, the sampling chamber shielding arrangement is transversely interposed between the acid port **700** and the sampling chamber **170,** thereby blocking transverse fluid communication between the acid port **700** and the sampling chamber **170,** and thereby enabling minimizing or preventing spill of the acid into the sampling chamber **170** following introduction of the acid into the housing **100** via the at least one acid entry port **700.**

In at least this example, the flow stream separator **200** also functions as the sampling chamber shielding arrangement, in conjunction with the acid port **700** being axially intermediate with respect to each one of the first axial edge **210** and the second axial edge **290** of the flow stream separator **200.** Conversely, in at least this example the sampling chamber shielding arrangement also functions as the flow stream separator **200** of the first aspect of the presently disclosed subject matter.

However, it is to be noted that in other alternative variations of this example, in a similar manner to the flow stream separator **200** as disclosed herein, *mutatis mutandis:*

- the respective shielding wall also separates the housing internal volume **VI** into a main channel and an auxiliary channel, the main channel extending axially between said first axial edge and said second axial edge, and wholly accommodating therein the electrolysis chamber on a first side of the shielding wall, the auxiliary channel extending axially between the first axial edge and the second axial edge and wholly accommodating therein the sampling chamber on a second side of the shielding wall;
- the shielding wall transversely separates the housing internal volume into the main channel and the auxiliary channel;
- the shielding wall is impermeable to water, for example pool water.

According to the second aspect of the presently disclosed subject matter, the at least one acid port **700** is wholly located in the main channel **CM.**

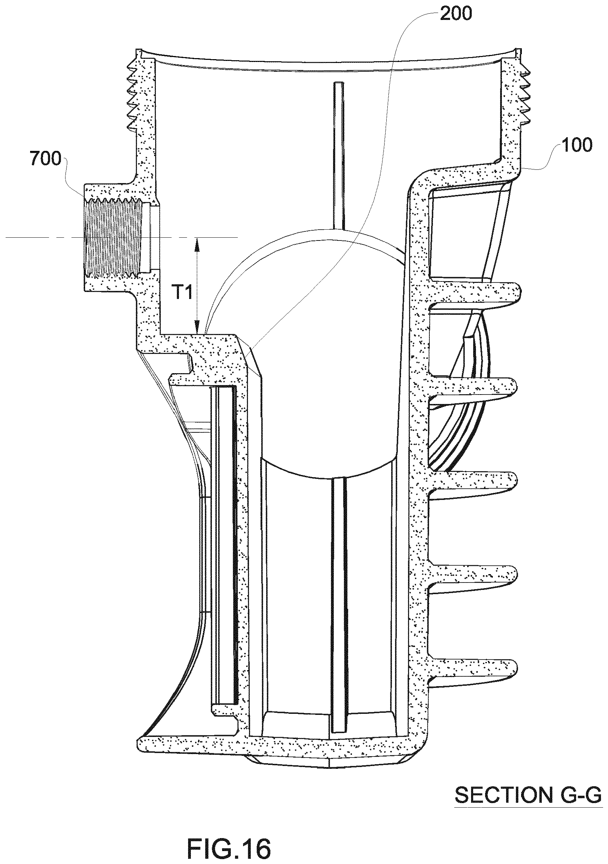

Referring to Fig. 16, the acid entry port **700** is transversely spaced from the shielding wall, in at least this example from the flow stream separator **200,** by a first vertical spacing **T1.** The first vertical spacing **T1** is taken vertically between a centerline of the acid entry port **700** and the top surface of the flow stream separator **200,** in particular of the first portion **252** thereof.

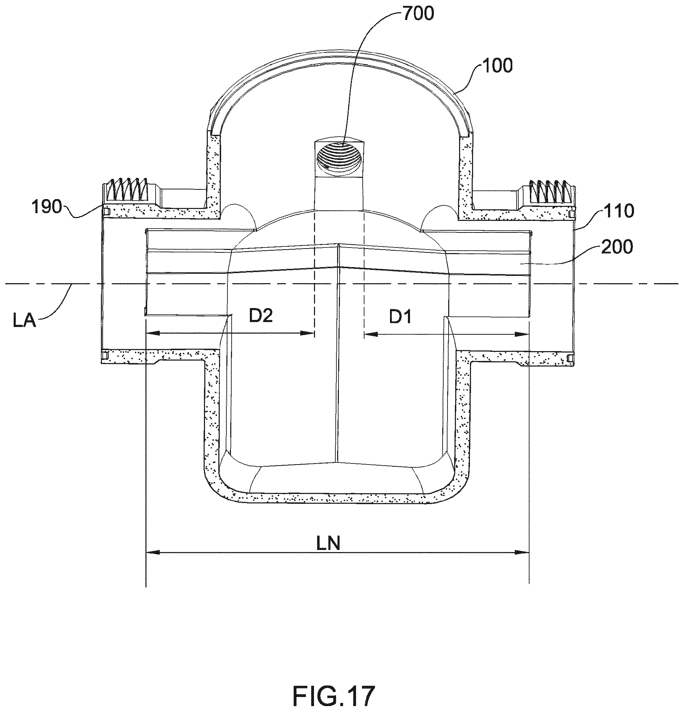

Referring also to Fig. 17, the shielding wall (in at least this example, the flow stream separator **200** and the shielding wall are one and the same component) has a shielding wall axial length **LN,** which also referring to Fig. 10 in at least this example is also the summation of the fifth axial spacing **X5,** the sixth axial spacing **X6,** and the seventh axial spacing **X7.**

In at least this example, a ratio of the first vertical spacing **T1** to the shielding wall axial length **LN** is within at least one of the following ranges: between 0.05 to 0.15; between 0.03 to 0.20.

In at least this example, and referring again to Fig. 17, the first axial edge **215** extends away from the acid entry port **700** (in particular, from the part of the edge of acid entry port **700** that is closest to the first axial edge **215**) towards the first water flow opening **110** by a first axial distance **D1.**

Similarly, the second axial edge **295** extends away from the acid entry port **700** (in particular, from the part of the edge of acid entry port **700** that is closest to the second axial edge **295**) towards the second water flow opening **190** by a second axial distance **D2**.

In at least this example, the first axial distance **D1** is equal to the second axial distance **D2**. Moreover, in at least this example, both the first axial distance **D1** and the second axial distance **D2** are non-zero.

However, it is to be noted that in at least some alternative variations of this example, only one of the first **D1** and the second axial distance **D2** can be non-zero, while the other one of the first axial distance **D1** and the second axial distance **D2** is zero. In such examples, the respective housing is not two-directional, and flow through the respective housing is either according to the first installation configuration only, or according to the second installation configuration only.

In yet other alternative variations of this example, the first axial distance **D1** and the second axial distance **D2** can be non-equal to one another. In yet other alternative variations of this example, both the first axial distance **D1** and the second axial distance **D2** can extend to the respective first water flow opening **110** and the respective second water flow opening **190**. In yet other alternative variations of this example, the first axial distance **D1** and/or the second axial distance **D2** can extend further to respectively project out of the housing **100** via the respective first water flow opening **110** or the respective second water flow opening **190;** in such cases, the respective first partition edge **210** and/or the respective second partition edge **290** project into the respective portion of piping of the recirculation circuit **950** that is connected to the first water flow opening **110** or the second water flow opening **190,** respectively.

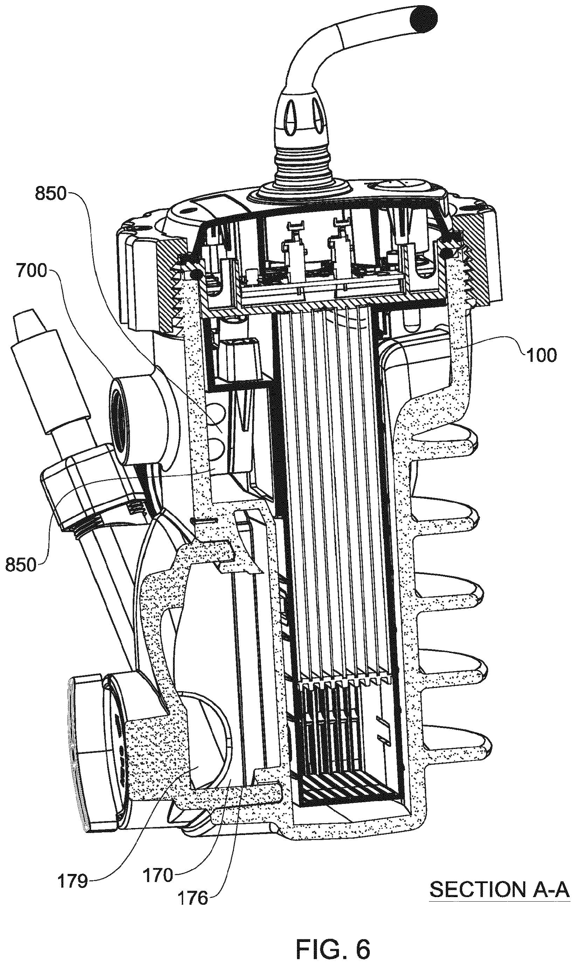

In at least this example, said first axial distance **D1** is about 30% of an axial dimension of the housing, and the second axial distance **D2** is about 30% of an axial dimension of the housing. Referring again to Figs. 6, 7, 8, the chlorinator **10** further optionally comprises a fluid flow sensor arrangement **850** for detecting the presence of flow of water inside the housing **100,** in particular inside the main channel **CM.**

The fluid flow sensor arrangement **850** is operatively coupled to a suitable controller, for example the control unit **940** and/or an external controller, for example controller **951** that forms part of the water recirculation circuit **950.**

The fluid flow sensor arrangement **850** provides suitable signals to the control unit **940** and/or an external controller that can form part of the water recirculation circuit **950,** which can then control operation of the electrolysis assembly **900,** such that the electrodes are not electrolyzing in the absence of water actually flowing through the main channel **CM** and thus through the electrolysis assembly **900.**

In at least this example, the fluid flow sensor arrangement **850** operates to sense the flow of water in either direction through the chlorinator **10,** i.e., regardless of whether the chlorinator **10** is installed in the first installation configuration or in the second installation configuration. In other words, the fluid flow sensor arrangement **850** is configured to detect flow of water in the electrolysis chamber **230** across the electrolysis plates **930,** while being insensitive to the direction of flow; accordingly, the chlorinator **10** can be installed without regard to flow direction therethrough.

In at least this example, the fluid flow sensor arrangement **850** is in the form of or comprises a bidirectional mechanical flow sensor. The fluid flow sensor arrangement **850** comprises a paddle **852** pivotally mounted on a shaft **851** so as to pivot freely thereabout. The paddle **852** is disposed such that surfaces **852a, 852b** thereof are substantially perpendicular to the direction of flow of water, e.g., perpendicular to the electrolysis plates **930.** Stoppers (not shown) are provided adjacent the paddle **852** to limit its movement. A top end of the paddle **852** comprises a sensing magnet **853** therein. A magnet sensor configured to detect the presence or absence of the sensing magnet **853** therebelow, such as a reed switch **856,** is provided above the paddle, e.g., in the control unit **940.**

The mechanical flow sensor **850** can further comprise a centering arrangement configured to ensure that, in the absence of any external force on the paddle **852,** such as from a flow of water thereacross, the paddle **852** remains in a vertical, non-tilted, position. According to some examples, two sockets **857,** each having a positioning magnet **858** therein, are provided adjacent the top of the paddle **852.** Equal forces exerted by each of the positioning magnets **858** on the sensing magnet **853** maintain the paddle **852,** in the absence of a flow of water past it, in a neutral position which is substantially perpendicular to the path via which water flows, for example nominally parallel to the longitudinal axis **LA.** The positioning magnets **858** can be arranged such that the dominant magnetic force exerted on the sensing magnet **853** is a repelling magnetic force, i.e., they are each aligned such that the pole thereof (north or south) which faces the sensing magnet **853** is the same as the pole of the sensing magnet closer thereto, i.e., the positioning magnet closer to the north pole of the sensing magnet is aligned with its north pole facing the sensing magnet, and the magnet closer to the south pole of the sensing magnet is aligned with its south pole facing the sensing magnet.

According to other examples (not illustrated), biasing elements, such as springs, are provided to impart equal, but oppositely directed, forces on the paddle **852** when in its rest position, for example above the shaft **851.**

It will be appreciated that the centering arrangement as described above is completely external to the paddle **852,** i.e., it does not require the addition of any elements to the paddle itself which it does not already comprise for the its use to sense flow of water (e.g., in the example given above relating to the positioning magnets **858,** the sensing magnet **853,** which the paddle requires for flow sensing, is utilized as well for centering thereof in the absence of flow).

In operation, the centering arrangement maintains the paddle **852** is a vertical rest position, such that the sensing magnet **853** is directly below the reed switch **856**. When a flow of water develops, thereby pivoting the paddle **852,** the sensing magnet **853** moves away from the reed switch **856,** which detects the change, thereby determining the presence of a flow of water through the electrolysis chamber **130**. When the flow ceases, the paddle **852** returns to its neutral position, with the sensing magnet **853** below the reed switch **856,** which senses the sensing magnet **853,** determining that there is no flow of water through the electrolysis chamber **130**.

It will be appreciated that while in the example of the fluid flow sensor arrangement **850** described above comprises two positioning magnets to maintain the paddle **852** in its neutral position, in alternative variations of this example the fluid flow sensor arrangement **850** can be provided comprising any suitable number of magnets without departing from the scope of the presently disclosed subject matter, *mutatis mutandis.*

The outputs from the fluid flow sensor arrangement **850** thus enable determining the state of flow through the electrolysis chamber **130,** to thereby enable the control unit **940** to operate the electrode assembly **900** only when there is a flow of water through the chlorinator **10,** and to stop electrolysis when there is no flow through the chlorinator **10.**

In at least this example, in operation of the chlorinator **10,** the control unit **940** is configured to receive input regarding the level and/or the change in parameters of the water, from the sensors **180** of the chlorinator **10** and/or from sensors external thereto, and to vary the rate of electrolysis (for example by varying the electrical power provided to the electrolysis plates **930**) in response thereto. These parameters may include, but are not limited to, one or more of pH level, salinity, chlorine level, oxidation/reduction (ORP) potential, level of contaminants in the water, or temperature. For example, the control unit **940** can be configured to decrease the current output by the power supply to the electrolysis plates **930,** and thereby lower the rate of electrolysis, in response to a detected drop in the salinity of the water.

The control unit **940** can be further configured to receive an input from a user, for example via a user interface, or an external operating system (e.g., a system configured to pump water through the chlorinator **10,** a system configured to supply salt to the water, and so on) to increase and/or decrease the rate of electrolysis, and to direct operation of the power supply accordingly. These inputs can include, but are not limited to, one or more of a desired level of chlorination, a flow rate of water being pumped to the chlorinator **10,** or an unexpected need for an increased level of sanitizing agent in the water.

Referring again to Fig. 7, and as already discussed above, in at least this example, the partition wall **250** extends from the inner surface **105** of the housing **110,** in both a horizontal direction and in a vertical direction. In other words, the partition wall **250** has a horizontal component and a vertical component.

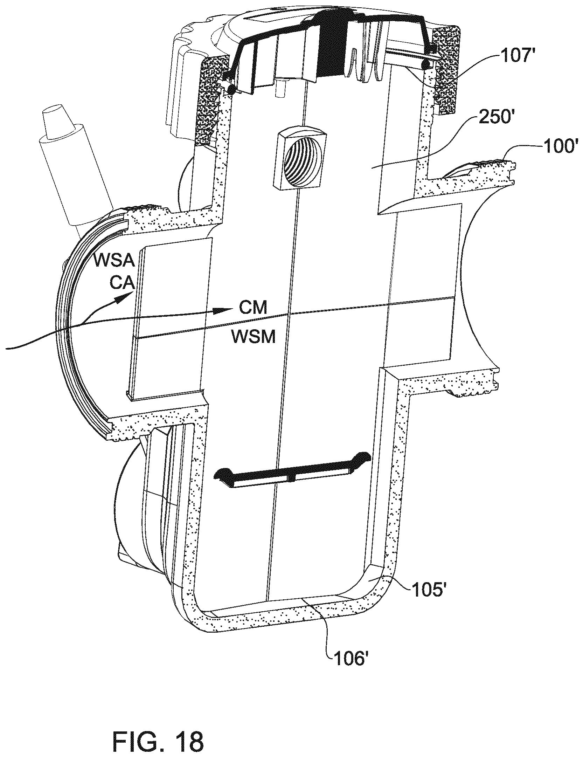

However, in alternative variations of this example, the partition wall can extend from the respective internal wall surface of the housing **110** only in a vertical direction, but not in a horizontal direction. For example, and referring to Fig. 18 for example, the respective partition wall **250'** extends vertically from the respective lower portion **106'** of the respective internal wall surface **105'** of the respective housing **100'** to the respective upper portion **107'** of the respective internal wall surface **105'.**

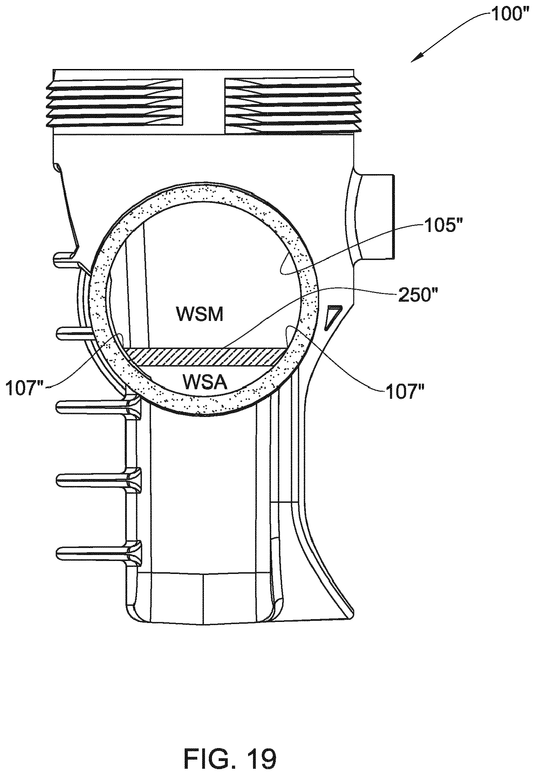

In yet other alternative variations of this example, the respective partition wall **250"** can extend from the respective internal wall surface of the housing **110** only in a horizontal direction, but not in a vertical direction. For example, and referring to Fig. 19 for example, the respective partition wall **250"** can extend laterally between the two opposite sides **109"** of the respective internal wall surface **105"** of the respective housing **100"** to the respective upper portion **107"** of the respective internal wall surface **105".** In such a case, lateral internal conduits (not shown) can direct the respective auxiliary water stream **WSA** into and out of the respective sampling chamber.

While in the examples illustrated in the figures, the respective housing comprises a single sampling chamber, disposed generally laterally with respect to the electrolysis chamber, other arrangements are also possible. For example, in alternative variations of the above examples, the respective housing can include a plurality of separate sampling chambers, wherein the auxiliary channel suitably bifurcates to provide respective auxiliary flow streams to each sampling chamber. In such a case, each sampling chamber can be provided on a different lateral side of the electrode chamber.

Finally, it should be noted that the word "comprising" as used throughout the appended claims is to be interpreted to mean "including but not limited to".

While there has been shown and disclosed examples in accordance with the presently disclosed subject matter, it will be appreciated that many changes may be made therein without departing from the scope of the presently disclosed subject matter as set out in the claims.

**Claims**

1. A housing for use in a chlorinator, the chlorinator being operable with an electrode assembly accommodated in the housing to produce one or more sanitizing agents from solute dissolved in water in operation of the chlorinator, said housing comprising a first water flow opening, a second water flow opening, an electrolysis chamber, a sampling chamber, and a flow stream separator:

   the first water flow opening being axially spaced from the second water flow opening and defining therebetween a housing internal volume, the first water flow opening and the second water flow opening configured for being coupled to a source of water in operation of the chlorinator; said electrolysis chamber being configured for accommodating therein at least a portion of the electrode assembly;

the electrolysis chamber axially extending between a first electrolysis chamber axial end and a second electrolysis chamber axial end, the first electrolysis chamber axial end being in fluid communication with the first water flow opening, the second electrolysis chamber axial end being in fluid communication with the second water flow opening;

the sampling chamber configured for selectively enabling sampling of water entering the housing in operation of the chlorinator, the sampling chamber comprising at least one sampling port, configured for enabling at least one sensor to be introduced into the sampling chamber from an outside of the housing;

the flow stream separator comprising a first partition edge, a second partition edge and a partition wall, the partition wall axially extending between the first partition edge and the second partition edge;

the partition wall separating the housing internal volume into a main channel and an auxiliary channel, the main channel extending axially between said first partition edge and said second partition edge, and wholly accommodating therein the electrolysis chamber on a first side of the partition wall, the auxiliary channel defined between and extending axially between a first auxiliary channel opening axially defined at the first partition edge and a second auxiliary channel opening axially defined at the second partition edge, the sampling chamber being wholly accommodated axially in the auxiliary channel between the first auxiliary channel opening and the second auxiliary channel opening, on a second side of the partition wall;

the flow separator being configured in operation of the chlorinator for separating at the first partition edge water flowing into the housing via the first water flow opening into a main water stream flowing through the main channel and an auxiliary water stream flowing through the auxiliary channel between the first partition edge and the second partition edge.

2. The housing according to claim 1, wherein said first auxiliary channel opening has a first auxiliary channel transverse cross-sectional area, and wherein said first partition edge defines a first main channel opening having a first main channel transverse cross-sectional area, and, wherein said second auxiliary channel opening has a second auxiliary channel transverse cross-sectional area, and wherein said second partition edge defines a second main channel opening having a second main channel transverse cross-sectional area.

3. The housing according to claim 2, wherein a ratio of said first main channel transverse cross-sectional area to said first auxiliary channel transverse cross-sectional area is in the range between about 7 to about 15, or, wherein said ratio of said first main channel transverse cross-sectional area to said first auxiliary channel transverse cross-sectional area is any one of: 15, 14, 13, 12, 11, 10, 9, 8, 7.

4. The housing according to claim 2, wherein a ratio of said second main channel transverse cross-sectional area to said second auxiliary channel transverse cross-sectional area is in the range between about 7 to about 15, or, wherein said ratio of said second main channel transverse cross-sectional area to said second auxiliary channel transverse cross-sectional area is any one of: 15, 14, 13, 12, 11, 10, 9, 8, 7.

5. The housing according to any one of claims 1 to 4, wherein the first electrolysis chamber axial end is axially spaced with respect to the first water flow opening by a third axial spacing, and wherein the second electrolysis chamber axial end is axially spaced with respect to the second water flow opening a fourth axial spacing, wherein optionally a ratio of said first axial spacing to said third axial spacing is in any one of the following ranges: 0.2 to 0.8; 0.5 to 0.7; 0.2 to 0.5, wherein further optionally a ratio of said second axial spacing to said fourth axial spacing is in any one of the following ranges: 0.2 to 0.8; 0.5 to 0.7; 0.2 to 0.5.

6. The housing according to any one of claims 1 to 5, wherein said sampling chamber comprises a flow diverter configured for directing the auxiliary water stream from the first axial edge to a bottom section of the sampling chamber, and for directing the auxiliary water stream from said bottom section to the second axial edge, the flow diverter including a barrier wall in the sampling chamber projecting transversely in the auxiliary channel with respect to a longitudinal axis of the housing, wherein optionally said flow diverter is configured for causing the auxiliary water stream to change direction by an angle greater than 60° when flowing through the auxiliary channel from the first axial edge to the bottom section, and/or wherein said barrier wall transversely projects away from the second side of the partition wall, and/or wherein the sampling chamber including the flow diverter are configured for providing a water trap in operation of the respective chlorinator.

7. The housing according to any one of claims 1 to 6, wherein said sampling chamber comprises a plurality of said sampling ports, each said sampling port configured for enabling a sensor to be introduced into the sampling chamber from an outside of the housing.

8. The housing according to any one of claims 1 to 7, wherein the housing is configured for being coupled to an inlet conduit and to an outlet conduit of a water recirculation circuit, alternately in each one of a first installation configuration and a second installation configuration, wherein:

   - in said first installation configuration the first water flow opening operates as a water inlet port and the second water flow opening operates as a water outlet port for the water, such that the first water flow opening is connected to an upstream portion of the water recirculation circuit and receives water flow therefrom, while the second water flow opening is connected to a downstream portion of the water recirculation circuit and delivers water flow thereto;
   - in second first installation configuration the second water flow opening operates as a water inlet port and the first water flow opening operates as a water outlet port for the water, such that the second water flow opening is connected to an upstream portion of the water recirculation circuit and receives water flow therefrom, while the first water flow opening is connected to a downstream portion of the water recirculation circuit and delivers water flow thereto.

9. The housing according to any one of claims 1 to 8, further comprising at least one acid entry port, wherein:

   the at least one acid entry port is configured for selectively enabling introduction of an acid therethrough into the electrolysis chamber;
   the flow stream separator being transversely interposed between the at least one acid entry port and the sampling chamber;
   the flow stream separator being configured for preventing transverse fluid communication therethrough;
   and wherein optionally the at least one acid port is wholly located in said main channel.

10. The housing according to claim 9, wherein the at least one acid entry port is axially intermediate with respect to the first partition edge and the second partition edge, and/or wherein the at least one acid entry port is transversely spaced from the partition wall by a first vertical spacing and wherein optionally the partition wall has a partition wall axial length, and wherein a ratio of the first vertical spacing to the partition wall axial length is between 0.05 to 0.15.

11. The housing according to any one of claims 9 to 10, wherein the first partition edge extends away from the at least one acid entry port towards the first water flow opening by a first axial distance wherein optionally said first axial distance is about 30% of an axial dimension of the housing, and/or, wherein the second partition edge extends away from the at least one acid entry port and towards the second water flow opening by a second axial distance and wherein optionally said second axial distance is about 30% of an axial dimension of the housing.

12. The housing according to any one of claims 9 to 11, comprising a single said acid entry port.

13. A chlorinator, comprising the housing as defined in any one of claims 1 to 12, and further comprising an electrode assembly accommodated in the electrolysis chamber.

14. The chlorinator according to claim 13, further comprising a control unit for controlling operation of the electrode assembly, and/or further comprising a fluid flow sensor arrangement configured for detecting the presence of water flowing inside the housing.

15. A water recirculation circuit including:

   at least one chlorinator as defined in any one of claims 13 to 14;
   a body of water;
   a pumping system;
   a controller;
   an inlet conduit configured for channeling water from the body of water to the chlorinator;
   an outlet conduit configured for channeling water from the chlorinator to the body of water;
   and wherein optionally the chlorinator is installed in a first installation configuration or in a second installation configuration, wherein in the first installation configuration the first water flow opening is connected to said inlet conduit such as to receive water flow therefrom, and wherein the second water flow opening is connected to said outlet conduit such as to deliver water flow thereto, during operation of the chlorinator, and, wherein in the second installation configuration the second water flow opening is connected to said inlet conduit such as to receive water flow therefrom, and wherein the first water flow opening is connected to said outlet conduit such as to deliver water flow thereto, during operation of the chlorinator.

FIG. 1

FIG. 2

FIG. 2(a)

FIG. 3

FIG. 4

SECTION A-A

FIG. 5

SECTION A-A

FIG. 6

SECTION B-B

FIG. 7

FIG. 8

900

925b

920

930

925a

FIG. 9

SECTION C-C

FIG. 10

VA

110

290

295

252

170

WD

176

DD

100

200

LA

190

AXC

CAX1

215

210

SECTION D-D

FIG. 11

210

CMX1

CAX1

215

100

101

FIG. 12(a)

CMX2

100

102

290

295

CAX2

FIG. 12(b)

SECTION E-E

FIG. 13

SECTION F-F

FIG. 14

FIG. 15

182

182

180

173

176

175

180

172

FIG.15(a)

SECTION G-G

FIG.16

FIG.17

FIG. 18

100"

105"

250"

WSM

WSA

107"

107"

FIG. 19

FIG. 20(a)

FIG. 20(b)

Europäisches
Patentamt

European
Patent Office

Office européen
des brevets

# EUROPEAN SEARCH REPORT

Application Number

EP 23 19 7769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/326680 A1 (MASTIO EMMANUEL [AU]) 6 November 2014 (2014-11-06) * figures 2,11 * * paragraph [0052] * * paragraph [0058] *  ----- | 1-15 | INV. C02F1/467 C25B1/26 C25B9/00  ADD. C02F103/42 |

TECHNICAL FIELDS
SEARCHED      (IPC)

C02F
C25B

The present search report has been drawn up for all claims

| Place of search | Date of completion of the search | Examiner |
|---|---|---|
| The Hague | 31 October 2023 | Janssens, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 7769

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2023

| Patent document cited in search report | Publication date | Patent family member(s) | Publication date |
|---|---|---|---|
| US 2014326680 A1 | 06-11-2014 | AU 2013203786 A1<br>US 2014326680 A1<br>WO 2013110144 A1 | 15-08-2013<br>06-11-2014<br>01-08-2013 |

EPO FORM P0459

For more details about this annex : see Official Journal of the European Patent Office, No. 12/82